(19)

Europäisches
Patentamt
European
Patent Office
Office européen
des brevets

(11)     **EP 1 730 913 B1**

(12)                          **EUROPEAN PATENT SPECIFICATION**

(45) Date of publication and mention
of the grant of the patent:
**24.02.2010 Bulletin 2010/08**

(21) Application number: **05729531.3**

(22) Date of filing: **30.03.2005**

(51) Int Cl.:
***H04L 25/03*** (2006.01)

(86) International application number:
**PCT/GB2005/001252**

(87) International publication number:
**WO 2005/096574 (13.10.2005 Gazette 2005/41)**

(54) **APPARATUS AND METHOD FOR COMPENSATING FOR DATA DEGRADATION**

VORRICHTUNG UND VERFAHREN ZUR KOMPENSIERUNG VON DATENDEGRADIERUNG

DISPOSITIF ET PROCÉDÉ POUR COMPENSER LA DÉGRADATION DE DONNÉES

(84) Designated Contracting States:
**AT BE BG CH CY CZ DE DK EE ES FI FR GB GR
HU IE IS IT LI LT LU MC NL PL PT RO SE SI SK TR**

(30) Priority: **31.03.2004 GB 0407341
03.02.2005 GB 0502257**

(43) Date of publication of application:
**13.12.2006 Bulletin 2006/50**

(73) Proprietor: **BRITISH TELECOMMUNICATIONS
public limited company
London
EC1A 7AJ (GB)**

(72) Inventors:
• **DELVE, Paul, Anthony
Ipswich Suffolk IP3 8BT (GB)**

• **DAVEY, Russell, Paul
Kesgrave,
Ipswich Suffolk IP5 2YW (GB)**
• **PAYNE, David, Brian
Wickham Market Suffolk IP13 0SD (GB)**
• **LORD, Andrew
Wickham Market Suffolk IP13 0UA (GB)**

(74) Representative: **Chabasseur, Vincent Robert et al
BT Group Legal
Intellectual Property Department
PP C5A, BT Centre
81 Newgate Street
London
EC1A 7AJ (GB)**

(56) References cited:
**WO-A-91/17607          US-A- 4 227 152
US-A- 5 210 774          US-A1- 2004 037 354
US-B1- 6 658 242**

## Description

The present invention relates to a central station, in particular to a central station configured to compensate for the degradation of data from a plurality of outstations.

It is known for compensation routines to correct for signal distortion. However, such known routines are not always suitable when the origin of data arriving at a central station changes on short time scales, or when the arriving data is heavily distorted. In US2004/037354 there is disclosed a method for optimising an equaliser, and in US6658242 there is disclosed a wireless telephone system.

According to one aspect of the present invention, there is provided a central station as specified in claim 1. in this way, starting parameter sets can be tested so that an appropriate initial parameter set can be chosen for compensating arriving traffic data. This will allow a situation to be quickly reached where a satisfactory parameter set is available for use with a data from a given outstation.

Preferably, to allow finer tuning of the compensation procedure, the compensation procedure will have a plurality of adjustable characteristics, and the parameter sets will each include a plurality of parameters for governing the adjustable characteristics.

The central station will preferably be configured to store a parameter set in respect of each outstation. This will reduce the need for the central station to calculate or select afresh parameter values for an outstation each time data from that outstation is received, making it easier for the central station to compensate for any distortion in data arriving from an outstation, in particular if data from any given outstation arrives at the central station in short bursts. The parameters may be stored locally at the central station, or the parameters may be stored by the central station at a remote location.

The parameter set stored in respect of each outstation is selected according to steps (i) to (iii) above. The selection for each outstation will preferably be carried out in an initialisation phase, when data from a newly connected outstation is received at the central station. A selected set chosen in respect of data from a given outstation may be stored for subsequent use with data from that outstation, which subsequent use may occur after data from a different outstation has been received and/or compensated. However, a stored parameter set for a given outstation may be improved, the improved values being stored for later use with data from that outstation, for example using an adaptive compensation procedure.

A starting parameter set may be selected from other starting parameter sets by comparing the quality achieved with different sets against a predetermined quality threshold. However, the selected set will preferably be chosen by comparing the quality (that is, a measure of the quality) of compensated data achieved with different starting sets, the chosen set being the set which achieves the highest quality..

The data used for comparing the different parameter sets (at least in respect of a given outstation) will preferably be the same data, which data may be copied at the central station for use with different starting parameter sets.

Preferably, test data from an outstation will be used to evaluate starting parameter sets, a copy of the test data being stored at the central station, preferably in advance of the arrival of the test data from an outstation. This will allow the stored test data to be compared with compensated test data from an outstation, so that the quality of the compensated data can be evaluated. The different starting parameter sets may be applied to test data in parallel, or alternatively, each parameter set may be applied to the data in turn.

The compensation procedure may also include the steps of: sampling a stream of data from an outstation at a plurality of time positions within the stream; and, performing a respective function on each sample, each respective function preferably being controlled by a respective parameter or group of parameters. The respective functions may each correspond to a characteristic of the compensation procedure. Each function may be a simple weighting function, each parameter being a weighting coefficient. However, the parameters may control other functions applicable to all the sampled points. For example, in the event that the compensation procedure involves a Fourier transform step, the parameters may each be used to perform a weighting to the Fourier coefficients.

Preferably, the outstations will be arranged to transmit data such that data from different outstations arrives successively at the central station: that is, such that data from different outstations does not overlap, at least for data transmitted on the same frequency channel if wavelength division multiplexing is employed. The outstations may send bursts of data, preferably digital data, one by one in a cyclic or other sequential fashion. Scheduling and other timing commands will preferably be sent by the central station in a broadcast fashion to instruct the outstations when to transmit data.

Since the scheduling commands stored at the central station provide advance notice of when an outstation will be transmitting data, the parameter set used when applying the compensation procedure to incoming data at the central station is conveniently chosen in dependence on the stored scheduling instructions (that is, the scheduling commands determine at least in part which parameter set or which parameter is chosen).

The scheduling instructions may contain an instruction for a specified outstation allowing that outstation to transmit traffic data for a specified duration, either as a continuous duration or a duration that is segmented. Thus, a scheduling instruction will preferably allow an outstation to transmit a finite amount of data. For example, upstream traffic may be arranged as a stream of frames, each frame containing a plurality of cells or other sub-divisions, and the scheduling information may instruct or permit an outstation to transmit data in one or more specified cells of a frame. Once an outstation has responded to a scheduling instruction, the outstation will preferably await a further scheduling instruction before transmitting further traffic data (although timing data or other management data may be retransmitted without requiring a scheduling instruction). Thus, once data from an outstation has been transmitted as a result of a first scheduling instruction, the outstation will preferably await a further scheduling instruction before sending further traffic data.

In one embodiment, the central station will receive a data stream having a plurality of successive stream portions, each having a different label associable therewith, at least some stream portions having a different characteristic of distortion to other [1]stream portions, wherein the central station is operable to access scheduling information from which the respective label associated with incoming stream portions can be inferred. The central station can then: infer the label of a data stream portion from the scheduling information, and select, in dependence on the inferred label, the parameter set for use with the stream portion associated with the inferred label.

The compensation procedure will preferably include an adaptive algorithm for improving the values of the parameters as data from a given outstation is being received. The outstations may be configured to transmit data that is already known at the central station to facilitate the training of the adaptive algorithm. When the adaptive algorithm is only partially trained in respect of data from a given outstation, some or all of the parameters which are only partially improved can be stored and saved for use when receiving further data from the same outstation at a later time. Therefore, the central station will preferably be configured such that when the origin of arriving data changes from a first outstation to a second outstation, the central station: (i) stores, for later retrieval, the improved values in respect of data from the first outstation; and, (ii) retrieves previously stored parameters in respect of the second outstation.

To help the adaptive algorithm to train (in addition to being used for selecting a starting parameter set), the central station may store predetermined data, and the or each outstation may store corresponding predetermined data, the or each outstation being configured to transmit its predetermined data to the central station such that, at the central station, the stored predetermined data and the received predetermined data can be compared. Preferably, to make it yet easier for the adaptive algorithm to evaluate how the distorted data has been corrected, at least some of the data will be the same (as between an outstation and the central station, different outstations possibly having different training data). The adaptive algorithm can then compare the corrected data with the data as it was before distortion, that is, as it was initially sent. Such "known" data may be included in the central station and outstations in a permanent memory chip at the time of manufacture.

An optical network, such as an optical fibre network, will preferably be provided to connect the central station to each outstation. However, radio communication may be employed between the central station and the outstations. If an optical network is employed, the network will preferably have at least one branch junction, also known as a "splitter", to allow signals from a plurality of outstations to be multiplexed passively onto a common carrier, such that signals arrive at the central station as a stream of time division multiplexed data. Thus, the communication network will preferably be arranged to operate in a time division multiplex access (TDMA) fashion for traffic travelling from the outstations to the central station (that is, "upstream" traffic), whereby each outstation transmits in a transmission period, the timing of the transmission periods being determined in response to one or more command instructions from the central station, the transmission of respective outstations being chosen so as to reduce the risk of data from different outstations overlapping or arriving at the central station at the same time.

A further aspects of the invention is specified in the appended independent claims. The invention will now be described in further detail, by way of example only, with reference to the following drawings in which:

Figure 1 shows a communications system according to the present invention, having a central station and a plurality of outstations;
Figures 2a and 2b respectively illustrate broadcast and interleaved multiplex transport at a branch junction in the communications system of Figure 1;
Figures 3a and 3b respectively show downstream and upstream frame formats;
Figure 4 shows schematically a functional representation of the central station in the communication system of Figure 1;
Figure 5 shows schematically a functional representation of one of the outstations shown in Figure 1;
Figures 6 (i) - (iv) show data bursts arriving from a plurality of outstations at the central station;
Figure 7 is a table showing steps in a compensation algorithm;
Figures 8a and 8b together show different columns of a table indicating steps in an adaptive compensation algorithm;
Figures 9a and 9b together show different columns of a table indicating steps in a further adaptive algorithm to treat data from different outstations;

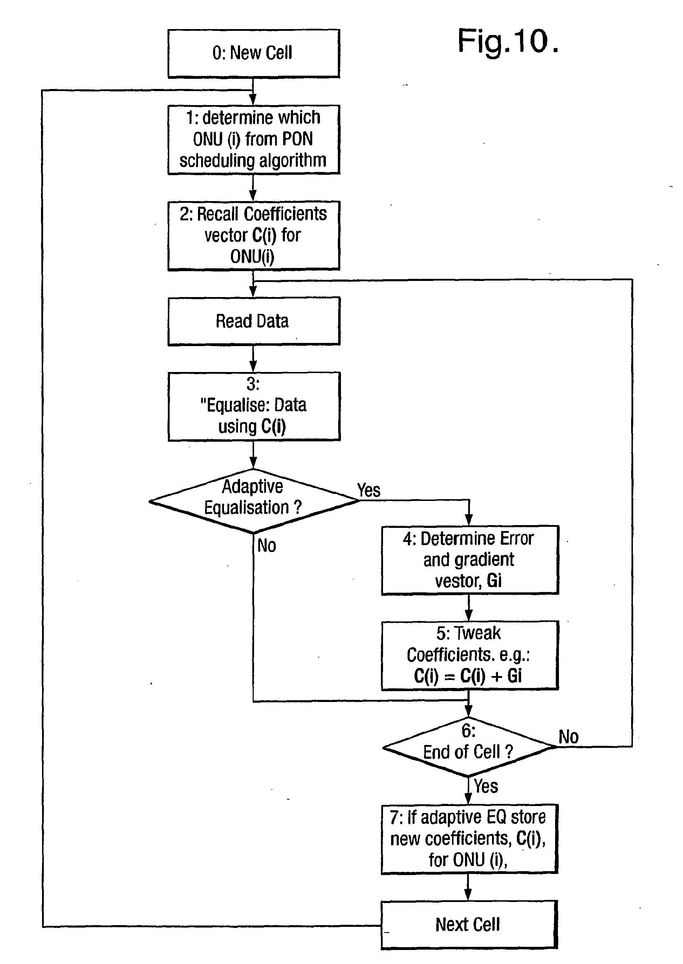

Figure 10 shows a flowchart with the main steps of Figure 9;

Figure 11 shows an alternative representation of a compensation algorithm; and,

Figures 12a and 12b show further examples of data arriving from outstations

Figure 13 shows a flowchart illustrating an algorithm where comparison of different starting coefficient sets is carried out in a parallel fashion

Figure 14 shows a flowchart illustrating an algorithm where comparison of different starting coefficient sets is carried out in a serial fashion; and,

Figures 15(i),(ii) show the compensation of data bursts when different staring coefficient sets are tested on the data.

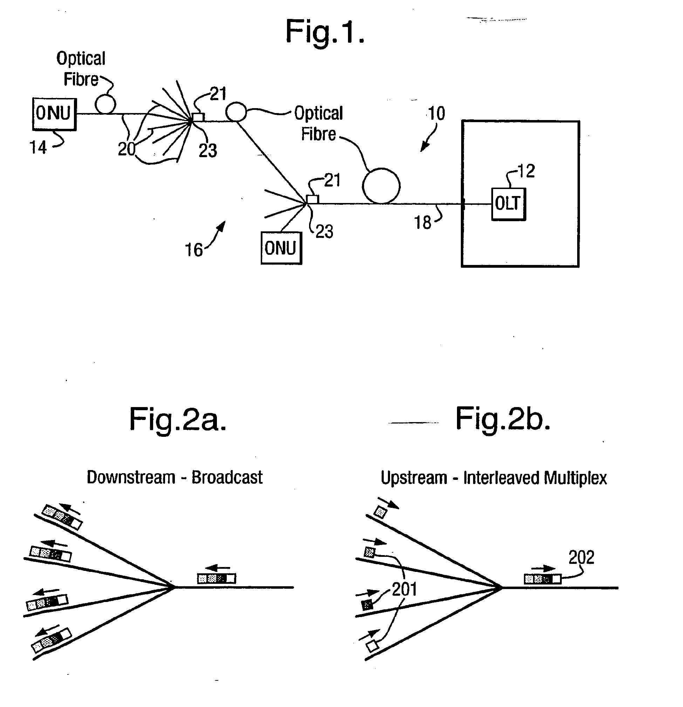

Figure 1 shows an optical network 10, also known as a Passive Optical Network (PON), in which the central station 12, (also known as an Optical Line Termination or OLT) is connected to a plurality of outstations 14 (each also known as an Optical Network Unit or ONU) by an optical fibre network 16. The fibre network 16 includes a trunk fibre portion 18 to which are connected a plurality of branch fibre portions 20 at a junction 21 formed by a coupler or splitter. The branch fibre portions 20 may each have a respective outstation 14 connected thereto. Otherwise, some or all of the fibre portions may have a respective further coupler 21 connected thereto, for connecting to a plurality of further branch portions.

The junctions 21 are arranged such that the intensity of light travelling from the central station 12 to an outstation 14, which direction is referred to as the "downstream" direction, is distributed amongst the branch or subranch fibres, in a preferably even fashion at a junction 21. In the reverse or "upstream" direction, that is, towards the central station, light from branch fibres is combined passively at the junction 21. Normally, a passive optical network will comprise a plurality of junctions and sub junctions, each junction n having a typical "split" of 32, that is, 32 branches joining to a common trunk.

To communicate with the outstations the central station transmits broadcast messages in the downstream direction, which broadcast messages are normally received by all the outstations, the messages having a tag or identifier to indicate which of the outstations is or are the intended recipient(s).

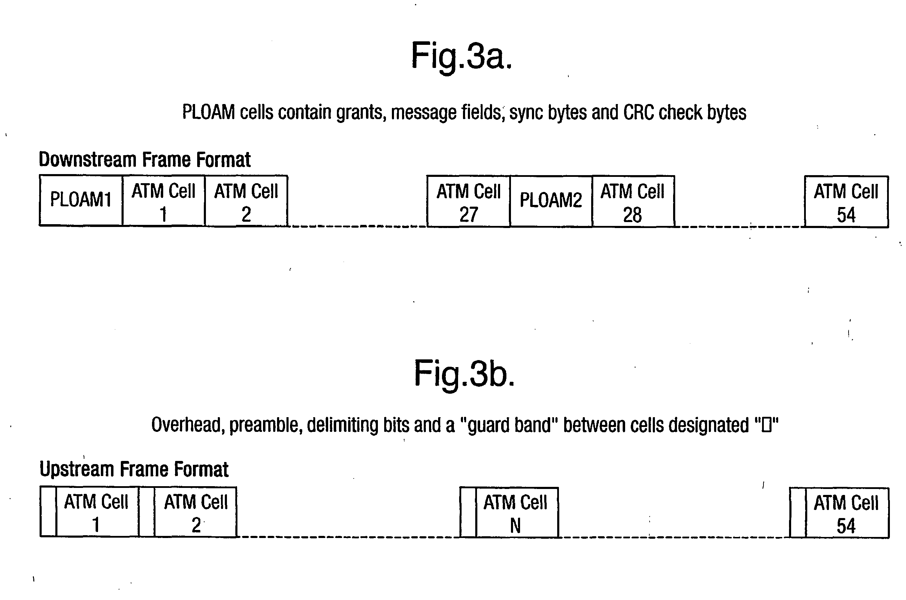

Transport in the downstream direction is illustrated in figure 2a. In the upstream direction, successive outstations transmit data in respective time slots 201, the time slots being arranged such that data from different outstations should not overlap when light from the different branch fibres is combined at a junction 21. In this way, data from the outstations is passively interleaved or equivalently time division multiplexed into a frame structure 202 at a junction, as illustrated in figure 2b. The central station 12 accesses data from each station by reading the time slots from that station, that is, using a time division multiplex access (TDMA) protocol. In a PON, ATM (Asynchronous Transfer Mode) cells are normally used to communicate between on the one hand the outstations and on the other hand the central station. An example of a frame structure having a plurality of ATM cells is shown in figure 3a for the downstream direction and figure 3b for the upstream direction. The ATM cells are 424 bits long, separated by guard bands in the upstream direction to allow for timing errors in the transmission from the respective outstations. Each ATM cell will contain a header that includes addressing fields and other defined types of information in addition to the data payload. In the downstream direction, these frames will have spaced apart signalling cells, with ATM cells carrying traffic data present between the signalling cells. In the example of figure 3b, the signalling cells are PLOAM cells that is, "Physical Layer Operation, Administration, and Maintenance" cells used by OLT cells to allocated (or equivalently grant) bandwidth. The PLOAM cells also provide synchronisation, and are used for ranging, error control, security and other "maintenance" functions. The rate at which they are sent is defined by the central station (OLT) and can vary according to the requirements of the OLT and the outstations (ONUs). Signalling in the upstream direction can be achieved using an upstream field in an ATM cell.

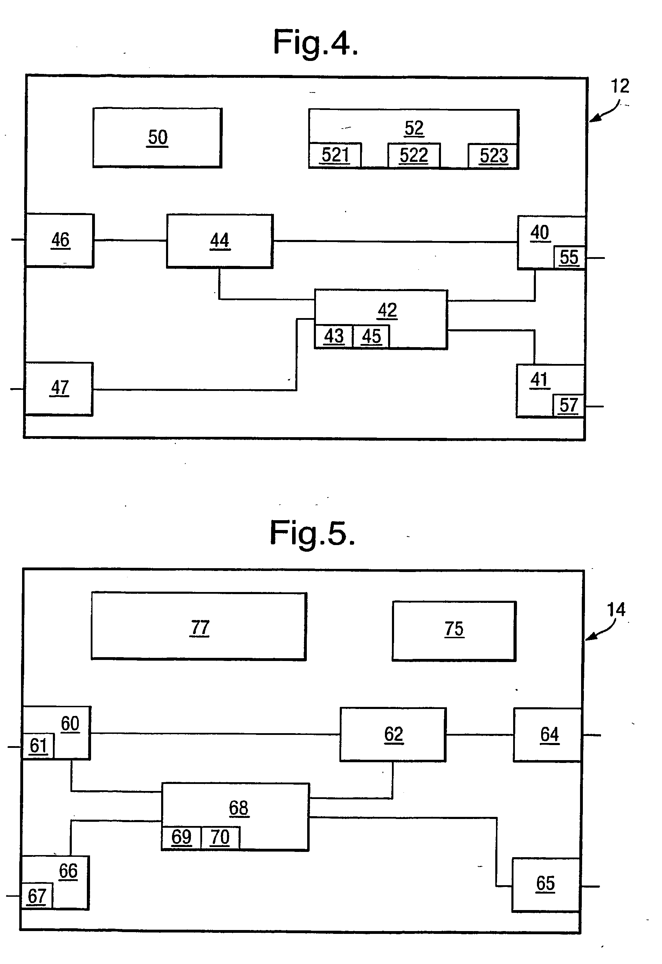

A central station 12 is shown in more detail in figure 4. The central station 12 includes: a network input stage 40 for receiving data from the outstations over a common fibre (the trunk fibre); a network output stage 41 for transmitting data to the outstations over the common fibre or another fibre for transport in the downstream direction; a central controller 42 connected to the input stage 40 and the output stage 41 for controlling the times at which each outstation transmits data; a compensation module 44 for treating data received from the outstations so as to compensate or equivalently "equalise" any distortion that the data may have suffered; a data output stage 46 for the output of compensated data from the outstations to a recipient (not shown); and, a data input stage for the input of the data to be transmitted to the outstations.

The central controller 42 and the compensation module 44 are implemented in at least one processor facility 50 having at least one processor'for manipulating data. Furthermore, the controller 42 and the compensation module 44 each have access to a memory facility 52 for storing data. The memory facility 52 may be distributed between the central controller and the compensation module, the compensation module having access to a local RAM memory 521 and/or fast access memory 522. This may include a store of predefined coefficients 523. The central controller may also include a clock 43 for timing and synchronisation, and buffers 45 for short term storage of data waiting to be sent to the network

The network input stage 40 has a photodetector 55 for converting received optical signals into electrical signals, so that the compensation module can process the received optical signals in the electrical domain, the compensation module being preferably implemented on one or more electrical chip devices. A laser 57 (or other light source) is provided at the output stage 41 for generating optical signals for transmission to the outstation, the optical signals being modulated or otherwise generated in response to electrical signals from the controller 42.

An outstation 14 is shown in more detail in figure 5. The outstation has: an input stage 60 for receiving optical signals from the central station 12; an optional compensation stage 62 for compensating for possible distortion of the signals along the fibre path from the central station; an interface stage for (i) receiving traffic from at least one customer terminal for transmission onto the optical network and (ii) sending traffic carried by the optical network to the customer terminal; an output stage 66 for transmitting traffic onto the optical network; and, a timing stage 68 for controlling the timing of traffic from the local user via the interface stage 64. The input stage 60 includes a photo detector 61 for converting optical signalling into corresponding electrical signals, so that the compensation stage 62 of the outstation can process the signals in the electrical domain.

The timing stage 68 is connected to the interface stage 64 so as to receive traffic intended for transmission onto the network 16. Correctly timed traffic is passed to the output stage as an electrical signal the output stage having a laser device 67 (or other source) for converting the traffic and other electrical signals into an optical signal. So that the timing stage 68 can time the transmission of signals in accordance with received instructions from the central station, the timing stage is connected to the input stage, preferably via the compensation stage 62. In particular, the timing stage 68 includes a clock 69 and a buffer 70 for short term storage of data prior to transmission. A processor 75 having at least one processor and a memory means 77 will be provided for the operation of the outstation, the memory and processor being implemented on one or more chip devices.

In one mode of operation, the central controller 42 of the central station is configured to broadcast a frame structure having a signalling cell (for example as part of a PLOAM cell), the signalling cell containing a frame synchronisation signal and scheduling instructions for instructing selected outstations to transmit in one or more respective return cells, or equivalently, an instruction for the selected outstations to transmit data with a respective delay relative to the receipt of the frame synchronisation signal. The central controller 42 will store the scheduling instructions in the memory 52 (preferably a fast accessible part of the memory, such as a RAM component thereof). This will allow other components of the system such as the compensation module to use the scheduling instructions to infer the identity of an outstation from which data is received.

The clock 69 at each outstation is preferably configured to synchronise to data such as cell synchronisation signals or other data, possibly scrambled data, in the broadcast frames. The timing stage 68 of an outstation 14 can then use the signals from the clock to control the delay stage such that data is delayed for the specified time relative to the receipt of a frame synchronisation signal before the data is transmitted. As a result, the central controller 42 can "schedule" the transmission of data from outstations. Such scheduling can be affected according to a specified cycle, which cycle may be changable, in particular if dynamic bandwidths allocations is employed, as will often be the case during normal operation.

As an alternative to each outstation being allocated a window in an initialisation phase, the controller may instruct an outstation to transmit data and instruct the remaining outstations to refrain from sending data, for an unspecified amount of time, until a transmit instruction is sent. Thus, the central station may exchange a series of messages with a given outstation whilst the other outstations are silent.

To take into account the different transit times from different outstations, the central station will effect a "ranging" procedure in which the central station instructs a selected outstation to return a signal a specified amount of time or immediately after receiving an instruction (alternatively, the central station may instruct a selected outstation to return a signal a specified amount of time after receiving a cell synchronisation signal, which cell synchronisation signals will normally be transmitted from the outstation at regular intervals). In dependence on the elapsed time between the transmission of the instruction and the arrival of the return signal, the central controller can calculate a differential delay offset, and transmit this offset value to the outstation. The timing stage 68 of that outstation will then store the offset value, such that the offset value is included in any future timing instructions from the central controller. In this way, data transmitted by the outstation will be transmitted with an additional delay corresponding to the offset value.

So as to maintain synchronisation, the timing stage 68 of each outstation may be configured to transmit a synchronisation check signal at time intervals. The check signal from each outstation will preferably be transmitted at a respective specified delay after the receipt of a frame synchronisation signal, or otherwise such that the check signal from each outstation arrives at the central station in a respective specified position in a returned frame. The central controller 42 will store a mapping relating the specified position of each check signal with the identity or address of the corresponding outstation. Thus, if a check signal is not received at the expected time position in a return frame, the controller can issue a command to the corresponding outstation, the command including an indication of the time difference between the received and expected times of the check signal, the timing stage of an outstation being responsive to the command so as to cause the delay stage 70 to change the delay by then amount corresponding to the indicated time difference. In this way, an out-off-time outstation can be returned to synchronisation.

The compensation module 44 is configured to run a compensation algorithm for treating or otherwise equalising data so as to correct the data for any inter symbol interference (ISI) or other distortion. The compensation algorithm has a plurality of adjustable characteristics each of which is representative of an aspect of the way in which the compensation algorithm treats data. The adjustable characteristics are governed by a set of coefficients (parameters) such that each co-efficient is associated with a respective characteristic. The choice of values for the coefficients will depend on the degree of distortion, and on the nature (type) of the distortion. The nature of the distortion may depend on several factors, such as the distance signals have travelled along an optical fibre, the material characteristics of the fibre, the bit rate and possibly the ambient conditions local to the fibre.

Typically, the optical fibre distance separating an outstation from a central station will be about 20km for existing PONs, but fibre lengths of at feast 50km, 100km, 150km or even 200km are envisaged. The distance between the central station and an outstations will normally differ from outstation to outstation, the difference being 20km, 50km or even 100km. In addition to facilitate compensation of distortion which changes abruptly (due to the different outstation distances), and the increased distortion due longer absolute distances, the present invention will also facilitate the use of optical sources (at the respective outstations) which have a broader bandwidth (sources of broader bandwidth such as Fabry Perot lasers are less costly than narrow bandwidth sources such as DFB lasers, but can lead to a higher degree of distortion).

In particular, it is appreciated in the context of the present invention that the nature and extent of the distortion is likely to be different for data from different outstations. Furthermore, although the distortion in incoming data at the central station is likely to change from cell to cell (i.e., as fast as about every 424 bits), the distortion is likely to change only slowly, if at all, in respect of data from a given outstation.

The compensation module stores a respective set of coefficients in respect of each outstation, in the form of a table, containing in one row a set of identifiers one for each outstation, and in another row, the respective sets of coefficients, the table containing mapping information which maps each outstation identifier to a set of coefficients. From the stored scheduling information, the compensation module infers the identity of the outstation from which each arriving cell of data originates. Each time it is inferred that data will arrive from a different outstation, the compensation module retrieves the set of coefficients stored for that outstation, and runs the algorithm in accordance with the newly retrieved coefficients so as to treat data from the current outstation. Thus, as a result of the scheduling process, the compensation module knows in advance which outstation the next cell to be received will originate from. The compensation module can therefore quickly switch between the appropriate coefficients to compensate the distortion of the next arriving cell. As a result, adjacent cells can have very different amounts of distortion, as the compensation algorithm will not need to start an optimisation process from the beginning for each cell, but can quickly recall the appropriate set of coefficients and therefore maintain appropriate values in the compensation algorithm.

The compensational algorithm will preferably be adaptive, that is, the compensation algorithm will preferably have an optimisation routine which improves the values of a set of components from a starting set of values. In this case, when the origin of arriving data changes from a first station to a second station, the compensation module will be configured to: (i) store, for later retrieval the improved values calculated in respect of data from the first outstation; and, (ii) retrieve or recall previously calculated co-efficient in respect of the second station. Preferably, the trigger for performing steps (i) and (ii) will be provided by the scheduling instructions, from the controller, which scheduling instructions will indicate in advance the identity of the outstation from which the future arriving data will originate. Thus, the central controller may provide a signal each time the origin of the received data is about to change from one outstation to another. Alternatively, the compensation module may simply store (in a local random access memory 521) or otherwise access the scheduling information (generated by the central controller) indicating the expected origin of the received data.

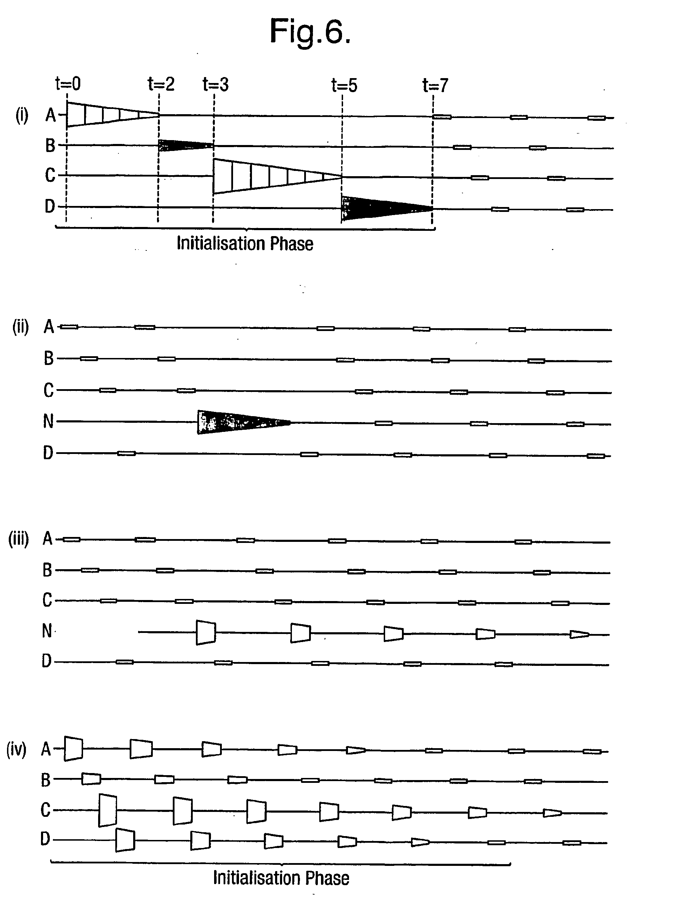

The operation of the compensation module can be illustrated with reference to Figures 6(i) - (iv), which each shows how the distortion of signals from outstations A, B, C, and D varies with time. Here, the time increases from left to right, segments of greater width indicating greater distortion. With reference to Figure 6(i) at t=0, initial coefficients stored in respect of outstation A are retrieved, and data received from outstation A is treated. At first, the data has a high level of distortion, but with increasing time, the optimisation routine of the algorithm improves the coefficients, with the result that the compensation algorithm is more effective at reducing distortion, and the distortion of the signal from outstation A diminishes. At t=2, data from A ceases, and the improved coefficients in respect of outstation A are stored with a mapping to that outstation. Initial coefficients stored in respect of outstation B are then recalled, and the compensation algorithm is run on data from outstation B to reduce the distortion. Outstation B is closer to the central station than the other outstations (or has an optical source of more narrow bandwidth or equivalently a "higher specification" optical source), with the result that the data from B has a lower level of distortion than the initial data received from the other outstations. At t=3, data from outstation B ceases, the improved coefficients calculated in respect of that outstation are stored, and new coefficients in respect of outstation C are recalled. Similar steps are carried out when the data from outstation C ceases and instead data from outstation D is received at t=5. At t=7, previously improved coefficients stored at t=2 are now retrieved in respect of outstation A. Because the previously improved coefficients are used, the treated data can be treated more efficiently, with the result that the level of distortion is lower than it would have been had the initial coefficients been employed. This is represented in Figure 6(i) by the narrow line width of data from outstation A at t=7. In Figure 6(i), each ONU is trained up serially before standard operation where normal scheduling takes place. This training or optimisation of the compensation algorithm could be implemented as part of a PON initiation phase along with ranging, or as a separate compensation or "equalisation" start-up phase after PON is complete. Once the compensation algorithm has "locked" and determined the relevant coefficients to a specified tolerance for an outstation, these coefficients will be stored in the memory 52, (or a local RAM 521) to be used during the standard operation. For simplicity, a trivial sequence scheduling is illustrated. However, the PON scheduling can be more complicated, responding to demands from the outstations.

It is clear from Figure 6 that the adaptive compensation can be distributed, such that coefficients in respect of one outstation are subject to a first improvement, and that when data from that outstation is next received, the improved coefficients are retained and subjected to a second, further improvement, wherein data from another outstation is received in the intervening period between the first and second improvements.

Figure 6(iv) illustrates an alternative "cold" initialisation procedure in which the initial optimisation of each of the outstations is split across a number of cells, once again employing the use of a local RAM to store the relevant coefficient. In a similar fashion to the procedure shown in Figure 6(i), the procedure of Figure 6(iv) involves the steps of: (a) retrieving coefficients for outstation A; (b) receiving data from outstation A; (c) improving the coefficients for outstation A using data received from outstation A and storing the improved coefficient; (d) repeating steps (a) to (c) in respect of outstations B, C, and D; and, (e) retrieving improved coefficients for outstation A. However, in Figure 6(iv), because the compensation algorithm has stored the improved coefficients for outstation A, these can be retrieved such that when further data from outstation A is received at t=4, the compensation algorithm, in particular the optimisation routine thereof can continue to train and further improve the values of the coefficient. In this way, the compensation algorithm can continue from the point where it stopped previously at t=1.

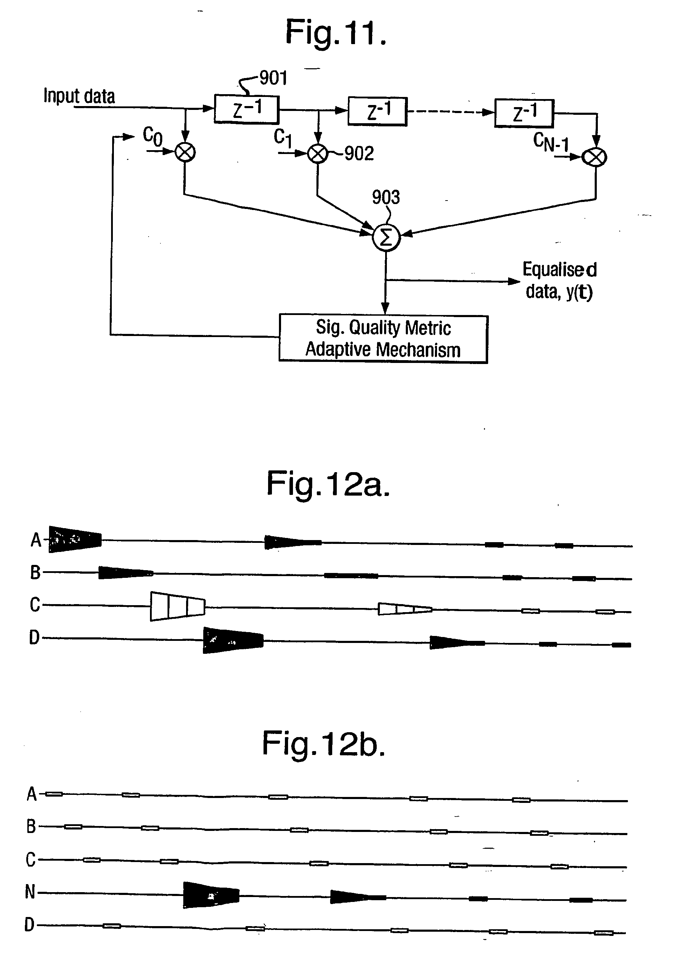

After the training or "initialisation" period illustrated in Figures 6(i) and 6(iv), the compensation module 44, in particular the compensation algorithm recalls the relevant set of coefficients for the ONU whose signal is being processed at that moment. When a new ONU connects to the PON it would be possible to allow the new ONU to initialise in a single burst as shown in Figure 6 (ii). However, to minimise the impact to other customers the initialisation would preferably take place over a number of cells as illustrated in Figure 6 (iii). Here the scheduling algorithm controls the TDMA and the compensation optimisation is spread over several cells. However the storage of the weighting coefficients enables the compensation algorithm to resume using it's previously saved coefficients, enabling it to continue to converge on an optimum response rather than start again from scratch (It may be possible and more efficient to send several cells together in the same ranging window, but the same basic principles apply - see Figure 12a which shows an initialisation phase with multiple cells being sent in a ranging window, and Figure 12b, which shows an example of a situation in which a new outstation is added to the network).

It is appreciated that ranging and scheduling can be achieved with Bit Error Rate (BERs) as low as $10^{-4}$ and so scheduling can take place before compensation is completed, such that scheduling can be applied as the compensation algorithm is in progress.

In order to allow the optimisation routine to more easily improve the values of the coefficients (as well as to allow a starting coefficient set to be selected - see below), an outstation will preferably transmit to the central station known data. This known data (such as a pseudo random bit sequence) will previously have been introduced into the memory of the respective outstations, for example at the fabrication stage, such that the optimisation routine is able to perform a feedback or recursive process, whereby the treated data is compared with the known data, and a convergence value is generated in dependence on the difference between the treated and known data. Once the convergence value reaches a threshold, the coefficients are deemed adequate, and the central station retains the value of the coefficients calculated when the convergence value attains the threshold. When this occurs, the central station is ready to accept traffic data (that is, unknown data, from the outstations).

It is possible that the ISI distortion on a link could vary in time. (Examples that could cause such a change include transmitter degradation, mode noise, PMD fluctuation, the addition of new fibre, and the use of a different transmitter in the ONU.) Consequently it is desirable that the PON be able to periodically (or continuously) re-optimise the weighting coefficients for each ONU. This could be achieved by periodically transmitting special training (non-traffic carrying) cells in a similar way to the way in which physical layer operation, administration, and maintenance (PLOAM) cells are used in an ATM PON (BPON). Alternatively the traffic carrying cells themselves could be used to fine tweak the coefficients.

In order to provide a starting value for the coefficients, the central station stores a plurality of possible starting (equaliser) coefficient sets S1,S2,..Sj. These may be pre-computed, such that each set is appropriate for a different amount or type of signal degradation (ISI), due for example to different lengths of fibre. Thus, in a non traffic carrying initiation phase, rather than "train" the algorithm's coefficient sets from their default values, the central station applies each of these different sets (sequentially or in parallel) to the incoming data. The incoming data sequence will be known (for example the data could be stored at the outstation and the central station during the manufacture stage). The central station then simply has to select the coefficient set that provides the best performance or minimum error (that is, a signal with the highest quality) by comparing the known data with the incoming data. In this way, the starting coefficient sets are each tested, and the most appropriate (preferred) coefficient set is selected. The central station can either use this selected coefficient set as the one to use for fixed (non-adaptive) equalisation, or as an initial set of coefficients to be improved when using an adaptive algorithm.

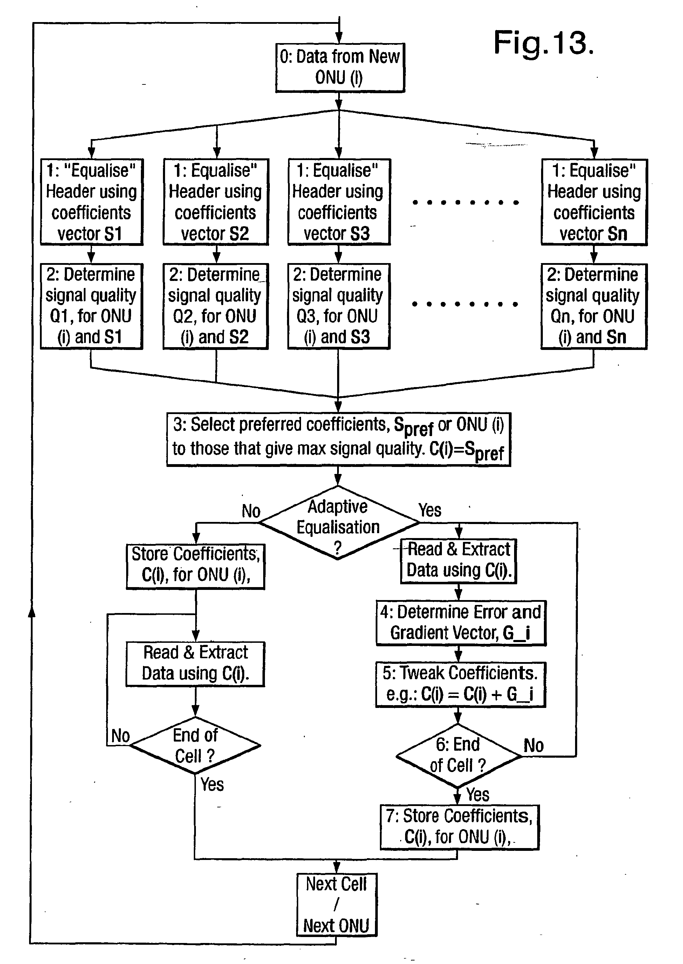

A flowchart illustrating the initiation phase is shown in Figure 13. Here, at step 0, known data is received from a new outstation. The data is copied, and each copy of the known data is compensated with a compensation procedure (such as the transversal tap described below). Each copy of the known data is processed in parallel with a different coefficient set (or vector). At step 2, the signal quality of the data processed using the different coefficient sets is evaluated. This can be done for example by determining the degree of correlation between the high and low values of the received and previously "known" data (provided the data is in digital form). At step 3, the coefficient set which provides the greatest signal quality is chosen and stored, either for immediate use with subsequent arriving data if the equalisation (compensation) procedure is adaptive. Otherwise, if the equalisation is adaptive, the coefficient set is improved or "tweaked" at steps 4 and 5 before being stored for later use to step 7.

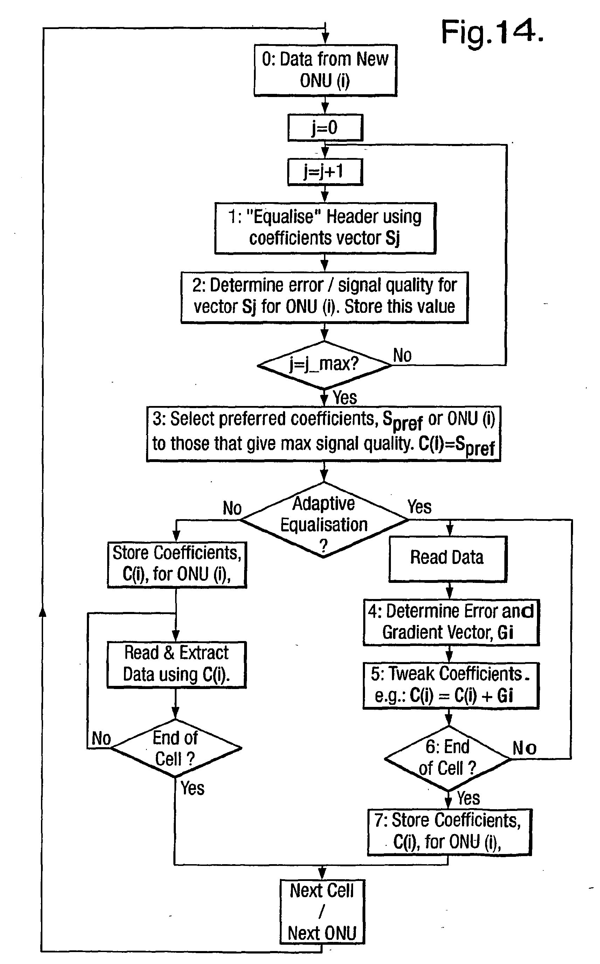

Figure 14 shows a flowchart illustrating an algorithm where comparison of different coefficient sets is carried out in a serial fashion. Here, each starting coefficient set (vector) is applied to each of a plurality of copies of known arriving data, at step 1. The signal quality of the so-compensated data is evaluated, and once all of the coefficient sets have been tested, the coefficient set producing the highest signal quality is retrieved for later use, in a similar fashion to that in figure 13, shown for coefficients chosen by parallel processing.

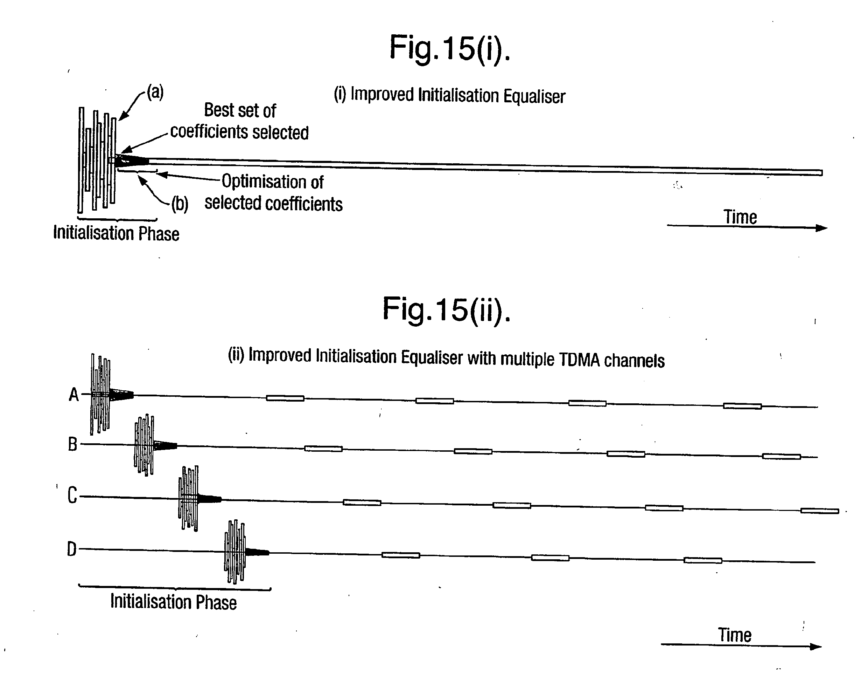

The evolution of the magnitude of distortion with time is illustrated in Figures 15 (i) and (ii) in the situation where a starting coefficient set is chosen from one of a plurality of possible sets. (The height of the bars indicates the amount of residual distortion after compensation using the different starting sets in phase (a), whereas in phase (b), the chosen coefficient set if improved using an adaptive algorithm). For the sake of simplicity a serial implementation example is shown in Figure 15 (i), which indicates how each of the different sets of coefficients are used in turn and the best set are then selected and then further optimised using adaptive techniques.

Figure 15 (ii) illustrates the situation for a PON where multiple ONU's share the bandwidth, showing an initial "cold" start up period where each ONU is trained up serially before standard operation where scheduling takes place. (This could be implemented as part of the PON initiation phase along with ranging etc, or as a separate "equalisation" startup phase after the PON initiation phase is complete). Once the equalisation algorithm has "locked" and determined the relevant coefficients for an ONU, these are stored in local RAM to be used during the standard operation. (For simplicity trivial sequential scheduling is illustrated. The PON scheduling algorithm can be more intelligent, responding to demands from the ONUs). The illustration provided in Figure 15 shows serial attempts by the equaliser using different sets of coefficients. Where multi-threading is possible multiple sets of coefficients could be tested simultaneously, reducing the time taken to determine the optimum set.

This "improved initialisation" in which a plurality of starting sets are used is a powerful enhancement as it overcomes concerns over the length of the training seq uence - a long sequence is no longer required as the device simply has to choose the best set of coefficients rather than perform and full optimisation. With a reasonable number of defined sets of coefficients, it also overcomes potential engineering restrictions that might have been required if the network had to deliver a certain minimum level of performance.

Another advantage in testing a plurality of starting coefficient sets is that this may be carried out even when the degree of distortion is too great for ranging and/or scheduling to be performed. In particular, the starting sets may be tested without the identity originating outstation being known. Such a situation may arise if the initial level of distortion (for example the bit error rate) is too high for the central station to properly read arriving data. Once a suitable coefficient set has been found, subsequent arriving data can be read using this set, allowing the central station to obtain the identity of the outstation if the identity is contained in the arriving data.

One example of a compensation algorithm is known as a Transversal Filter process. In general terms, the operation of the process involves taking samples at a plurality of points, that is, time positions or "taps" along an incoming stream of data. The taps may be at intervals of less than one bit spacing in the incoming data stream, for example every half or one quarter of a bit period. Furthermore, the sampling intervals need not be regular, and could be irregular, for example to take into account the complexity of arriving data. Preferably, the taps are at successive or "neighbouring" bit positions. For each target bit to be compensated, weighted samples of bits in the neighbourhood of the target bit can then be mixed with the target bit. In particular, the weighed neighbourhood bits are normally added or subtracted from the target bit. (Because of the distortion or overlap between bits, the bits no longer have a 0 or 1 value, but can have values in a continuous range).

The neighbourhood bits will preferably include at least one immediate neighbourhood of the target bit, such that for a 3 tap filter process, the target bit and its two (in this example trailing) neighbours in the data stream are sampled. For a 5 bit tap, the next 4 nearest trailing neighbours of the target bit will be included in the neighbourhood being sampled, etc...To weight the sampled bits, a weighting function is applied to each respective bit, the weighting function for each bit being governed by a respective one of the coefficients in the set corresponding to the outstation whose data is to be corrected. Preferably, the weighting function is a simple factoring function (e.g., multiplication).

To operate the filter process, the compensation module will store a given number of successively arriving bits in respective memory locations in the memory 52, for example in a shift register 522 within the memory 52. Essentially, in operation, (i) each successive data bit is weighted by the coefficient associated with the memory location in which that data bit is present, (ii) the weighted values are saved, and, (iii) the data is then shifted, such that data in one memory location is replaced by the data in the immediately trailing bit slot, that is the slot next to have arrived. Step (i), (ii) and (iii) are repeated in order, with the result that for each cycle a value is generated which is a combination of the sample data at each memory location. In particular, for each target data bit, the combination comprises that target data bit together with the weighted bits which trail the target bit in a specified neighbourhood.

In more detail, the data received at the central station can be represented by R(x), and takes values R1, R2, R3, .... Rx-1, Rx ,Rx+1, etc... in each bit position, Rx being the target bit to be compensated. Here, the label "x" refers to a position of a bit in the bit slot stream. The "compensated" data / "Output", E(x), is given by the sum of each sampled bit weighted by a coefficient, that is, by the expression

$$E(x) = \sum_{i=0}^{n-1} c_i R_{(x-i)}$$

So that for a "3 tap" filter, where n=3, the compensated data is given by:

$$E(x) = c_0 R_x + c_1 R_{x-1} + c_2 R_{x-2}.$$

It is also useful to use vector notation E = **C.R** , where **C** contains the coefficients

$$(c_0, c_1, c_2, \ldots, c_{n-1}) \text{ and } \mathbf{R} \text{ the sampled data } \begin{pmatrix} R_x \\ R_{x-1} \\ R_{x-2} \\ .... \\ R_{x-n} \end{pmatrix}.$$

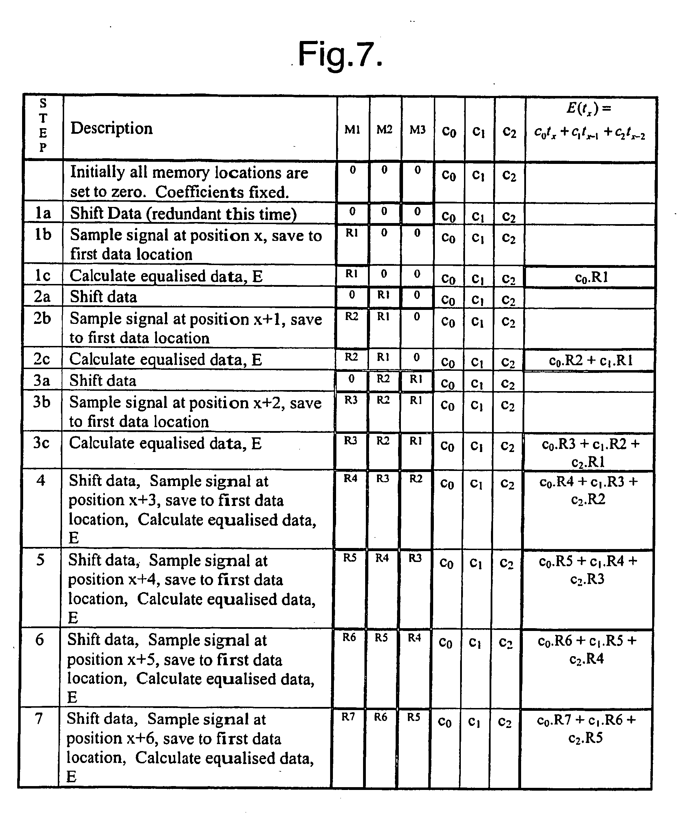

Figure 7 shows a table outlining the main steps of a compensation algorithm. The coefficients c0, c1, and c2, which in this example are static, each correspond to memory locations M1, M2 and M3 respectively. The rows labelled M1, M2 and M3 show for each step which data bits R1-Rx are loaded in the respective memory location M1-M3. The last (right hand) column shows the compensated values obtained for the equalised data: for example at stage 3c the equalised data for the R3 bit slot position is given.

The following provides a description of a possible compensation algorithm which is adaptive, such that the algorithm can perform an optimisation or training routine, in order to improve the values of the coefficients used for compensating for signal distortion from a given outstation. The "compensated" data / "Output", E(x), is still described by the expression given above, although now the coefficients are allowed to vary and are adjusted to provide an improved filter for "filtering off" or otherwise reducing distortion. Modifying the expression to reflect the time dependant nature of the coefficients gives:

$$E(x) = \sum_{i=0}^{n-1} c_i(x) R_{(x-i)}$$

So that for a "3 tap" filter, where n=3, the compensated data is given by:

$$E(x) = c_0(x).R_x + c_1(x).R_{x-1} + c_2(x).R_{x-2}$$

Initially all memory locations are set to zero. Coefficients are set to their initial values (this will normally be their "expected"/mean value to help reduce convergence time). Adjustment of the coefficients will involve an algorithm responding to some indication of signal quality. Where some of the data is known this can be an error function that simply measures the difference between the "compensated" data and the known data. In such a case the optimisation seeks to reduce this error. Here, a known training sequence is used to allow a direct measurement of the error. (However, it an attempt may be made to optimise "blind" by using another signal quality metric such as "eye opening").

Imagine the known, transmitted data is given by K(x). This could be written as K1,K2,K3,....Kx-1,Kx,Kx+1...., etc. The received data is still given by R(x), and takes values R1, R2, R3, .... Rx-1, Rx ,Rx+1, etc... The compensated data E(x) takes the values E1, E2, E3, ..., Ex-1, Ex, Ex+1. The error, e(x) between the compensated data and the known data is simply K(x)-E(x).. The adaptive algorithm will tweak the coefficients in such a way to minimise this error.

A variety of different optimisation techniques may be used: one example is to reduce the (mean square) error, by making slight changes to the coefficients and choosing the increments that reduce the error (if the form of the function is known, more informed estimates can be made using derivatives of the function to revise the coefficients). Using the vector notation, if **E = C.R**, a revised estimate can be written, **E' = (C+$\delta$C).R,** such that **e' (=K-E') < e (=K-E)**. The new coefficients are given by **C' = C + $\delta$C**.

As a summary of the processes (using known data), the following steps are carried out (steps VI & VII can be omitted where data is incomplete during the first few cycles):

    I. Initially all data memory locations are set to zero and coefficients take initial values
    II. Shift Data
    III. Sample signal at position x, save to first data location
    IV. Calculate compensated data, E
    V. Recall known data and calculate error, e,
    VI. Calculate "Gradient" i.e., determine changes to coefficients in order to reduce or minimise error
    VII. Tweak coefficients to new values as determined in VI.
    VIII. Go to step II

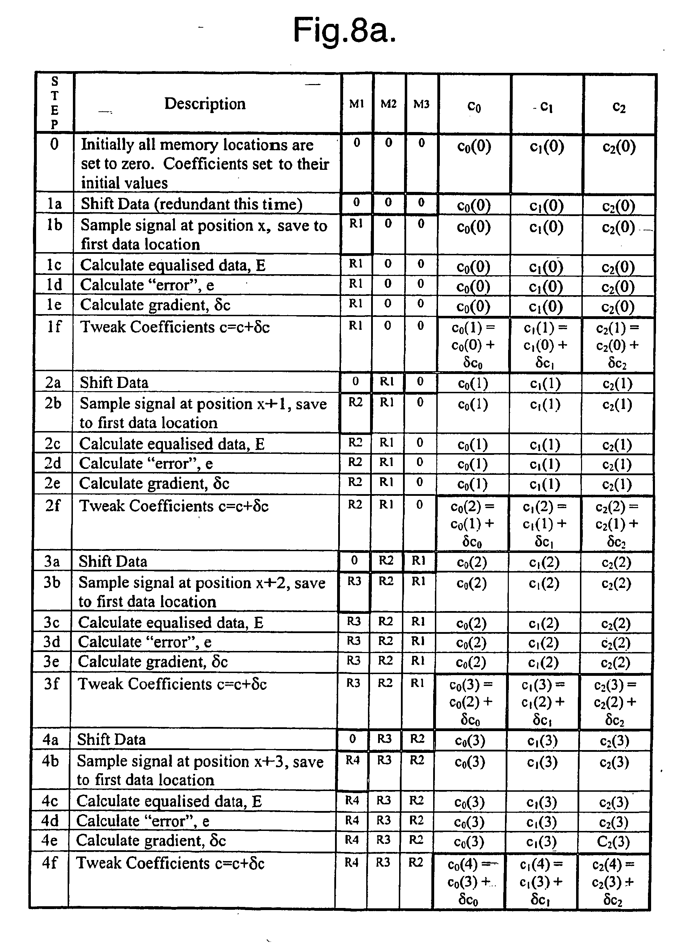

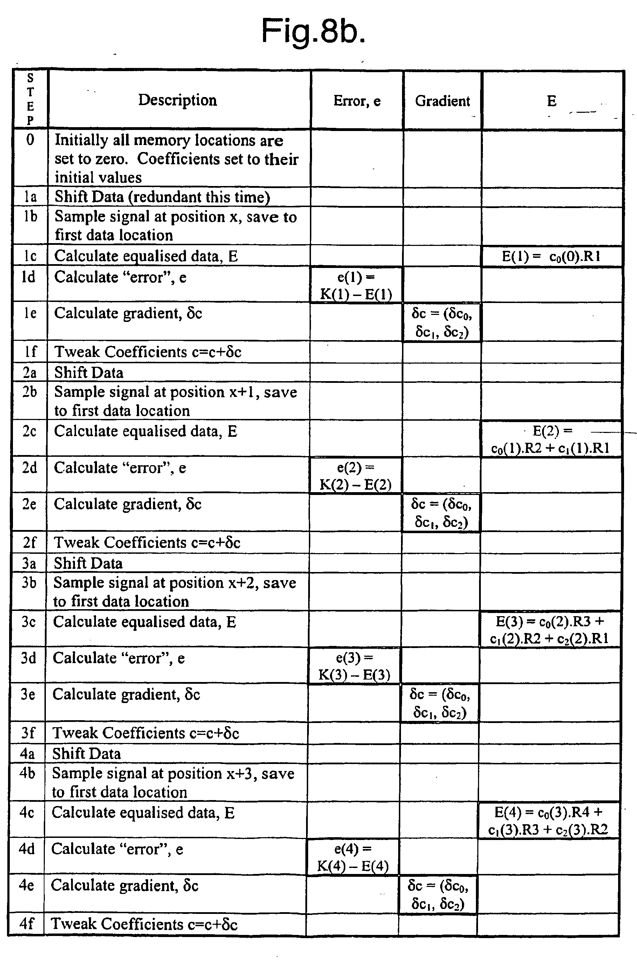

The initial values may be calculated as a function of the offset delay value which the central controller has calculated for each outstation, or otherwise another delay-related parameter indicative of the transit time from an outstation to the central station may be used, since the transit time will normally be related to the fibre path length, which in turn will be indicative of the extent of the likely distortion. A table indicating the steps involved in an adaptive compensation algorithm is shown in Figures 8a and 8b. Figures 8a and 8b show the same rows but different columns of the table.

Below is a description of an algorithm which explicitly allows for data from different outstations to require different filtering coefficients c1,c2,c3, etc...The "compensated" data / "Output", E(x), are described by the expression for the adaptive example given above, although now there are separate sets of coeff icients for each ONU. The filter functions in the same way, but jumps between sets of data for different ONUs using the knowledge of the order of transmission from the scheduling algorithm. Writing as a step by step process:

    I. Initially all data memory locations are set to zero and coefficients take initial values Normal Operation
    II. New Cell - Determine which ONU is transmitting using knowledge from the scheduling algorithm
    III. Retrieve coefficients for ONU
    Equalise Data
    IV. Shift Data
    V. Sample signal, save to first data location
    VI. Calculate compensated data, E
    If data known, optimise coefficients (else go to step X)
    VII. Recall known data and calculate error, e,
    VIII. Calculate "Gradient" i.e., determine changes to coefficients in order to minimise error
    IX. Tweak coefficients to new values as determined in VIII.
    End of loop
    X. If end of cell store coefficients and go to step II, else go to step IV

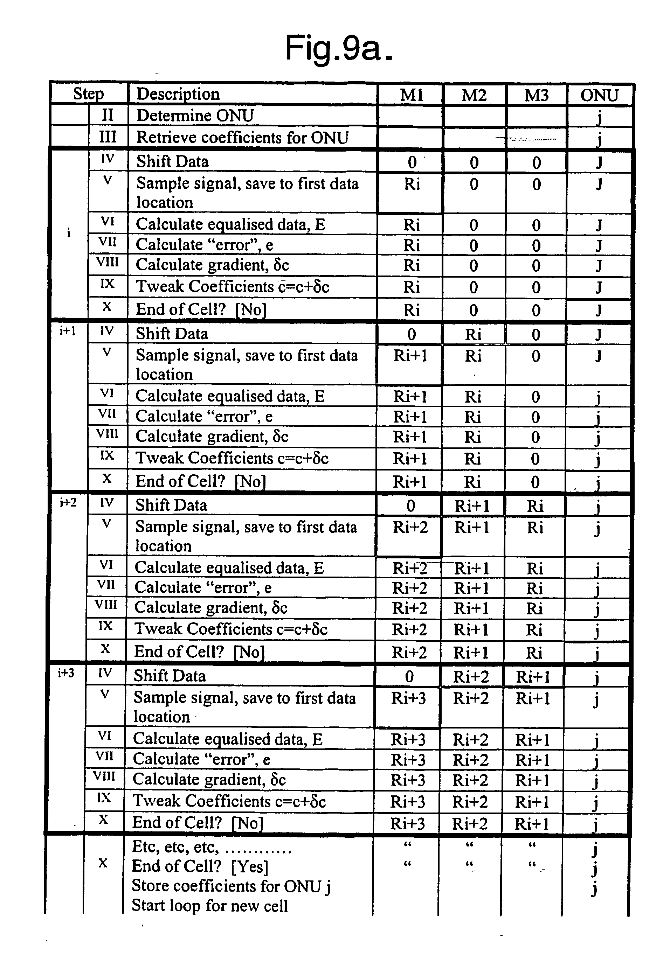

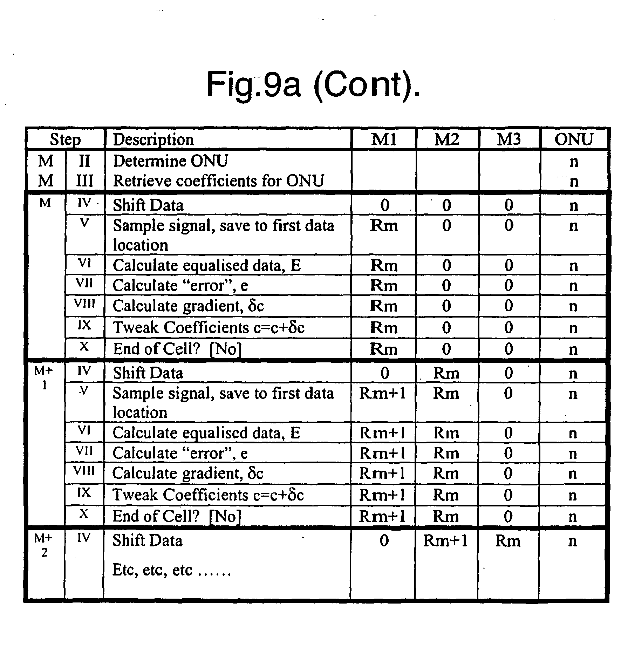

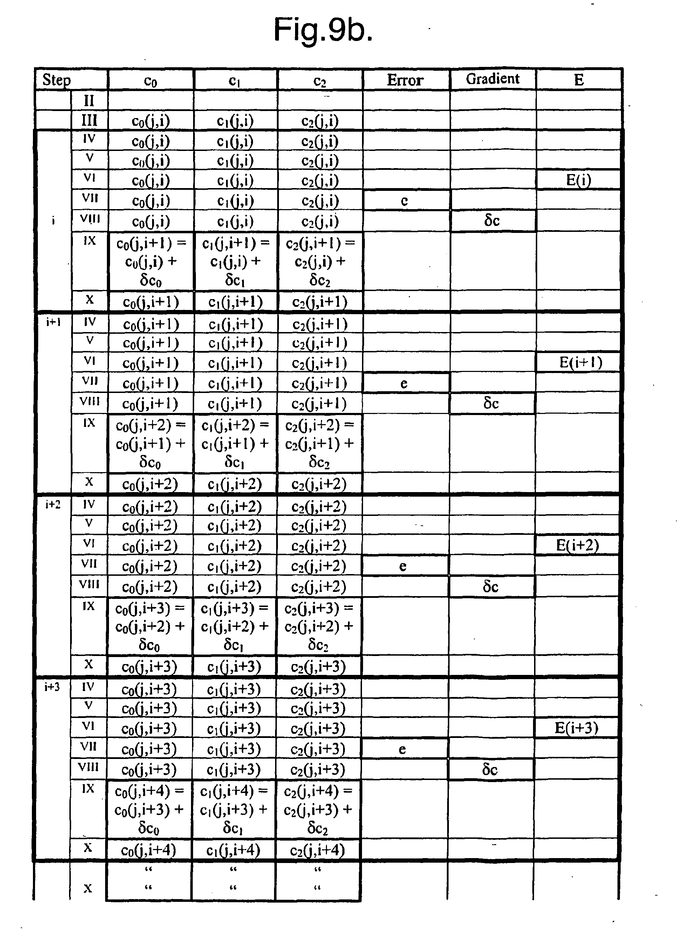

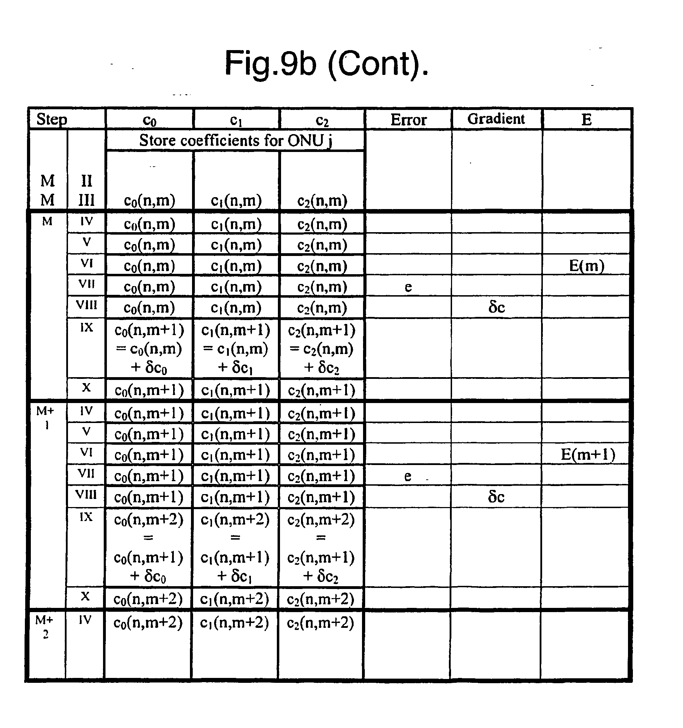

Illustrated in Figure 9a,9b and 9c is a table for the case where data is known and coefficients are being adjusted (9a,9b and 9c show the same rows but different columns of the table). Where the data is not known steps VII - IX are skipped and the coefficients remain fixed.

Modelling has shown the feasibility of achieving PON initialisation at BER of $10^{-3}$ - $10^{-4}$ discussed. Table 1 below shows that at this BER there is a good probability of receiving data for initiation (start up, ranging etc) even though performance is not acceptable for client traffic.

Table 1

| Log(BER) | Probability of getting n successive bytes error free | | | | | | | | | |
|---|---|---|---|---|---|---|---|---|---|---|
| | n=1 | n=2 | n=3 | n=4 | n=5 | n=10 | n=20 | n=30 | n=40 | n=43 |
| 1 | 0.4305 | 0.1853 | 0.0798 | 0.0343 | 0.0148 | 0.0002 | 5E-08 | 1E-11 | 2E-15 | 2E-16 |
| 2 | 0.9227 | 0.8515 | 0.7857 | 0.725 | 0.669 | 0.4475 | 0.2003 | 0.0896 | 0.0401 | 0.0315 |
| 3 | 0.992 | 0.9841 | 0.9763 | 0.9685 | 0.9608 | 0.9231 | 0.8521 | 0.7865 | 0.726 | 0.7088 |
| 4 | 0.9992 | 0.9984 | 0.9976 | 0.9968 | 0.996 | 0.992 | 0.9841 | 0.9763 | 0.9685 | 0.9662 |
| 5 | 0.9999 | 0.9998 | 0.9998 | 0.9997 | 0.9996 | 0.9992 | 0.9984 | 0.9976 | 0.9968 | 0.9966 |
| 6 | 1 | 1 | 1 | 1 | 1 | 0.9999 | 0.9998 | 0.9998 | 0.9997 | 0.9997 |

The above table indicates there is a good probability of receiving data from the limited number of bytes required for communication in the initial activation stage before equalisation has taken place. In the event of a failure the ONU can simply resend. The following table (Table 2) shows the increased probability of success after 5 attempts.

Table 2

| Log(BER) | Probability of getting n successive bytes error free after 5 attempts | | | | | | | | | |
|---|---|---|---|---|---|---|---|---|---|---|
| | n=1 | n=2 | n=3 | n=4 | n=5 | n=10 | n=20 | n=30 | n=40 | n=43 |
| 1 | 0.9401 | 0.6411 | 0.3401 | 0.1603 | 0.0718 | 0.0011 | 2E-07 | 5E-11 | 1E-14 | 0 |
| 2 | 1 | 0.9999 | 0.9995 | 0.9984 | 0.996 | 0.9485 | 0.6729 | 0.3747 | 0.1851 | 0.1479 |
| 3 | 1 | 1 | 1 | 1 | 1 | 1 | 0.9999 | 0.9996 | 0.9985 | 0.9979 |
| 4 | 1 | 1 | 1 | 1 | 1 | 1 | 1 | 1 | 1 | 1 |

Figure 11 shows a diagram illustrating the main steps in the adaptive algorithm of Figures 9a, 9b and 9c. An alternative representation of an adaptive compensation algorithm is shown in Figure 11. Here, data from the input stage 40 of the central station is initially "tapped" to extract a bit slot value, and is weighted by coefficient c0. A function, here a transform $Z^{-1}$, having a delay of one bit, is imposed by a transform stage 901 before the next bit slot is sampled and weighted by coefficient c1 at the weighting stage 902. A further transform stage with a delay of a further 1 bit delay is applied before data is tapped before and then weighted by another coefficient, and so on for additional 1 bit delays. The weighted samples are then summed at a summing unit 902. Here, the transform stage 901, weighting stage 902 and summing stage 903 are software units implemented in a processor and memory, for example located in the processor means 50 and memory means 52 of the central station. The sets of coefficients can then be changed from on ONU to the next.

Other families of equalisation (compensation) algorithm may be used, such as: Linear Equalisation; Decision Feedback Equalisation (& Feed forward); Non-linear Equalisation; Maximum likelihood sequence detection (MLSD), also referred to as Maximum likelihood detection (MLD); possibly "blind" techniques; and, constant Modulus Algorithms (CMA).

An embodiment of the invention can be better understood by way of example, with reference to the following steps in which the central station is referred to as an OLT, and outstations are referred to as ONUs.

1. The OLT broadcasts to all ONUs. After ONU power up the ONU listens for downstream traffic from the OLT, from which it will obtain bit and frame synchronisation. (It can do this from framed data)

2. The OLT broadcasts to all ONUs. The new ONU(s) listen & receive all broadcast cells from OLT. The ONU extracts network parameters (initial transmit power level and ranging-related delay, format of frame, the preamble etc to be used upstream, details of when to send registration and ranging requests etc). These parameters are regularly broadcast downstream by the OLT in defined bytes, so that all the ONU has to do is listen long enough to extract the relevant information. For example the OLT could sen d bytes in defined bytes in the header to indicate that the ranging window occurs between bytes XXX to YYY within the frame. (Alternatively the bytes could indicate a period of TTT after the end of Frame ZZZ, or for a period of TTT after a given byte sequence is transmitted by the OLT).

3. It is appreciated that that at any individual ONU, the signal from the OLT is likely to have experienced the same distortion (ISI) for its TDMA timeslots. Each frame or cell will have a known series of bytes that could be used as input data to the com pensation algorithm. Alternatively cells of known data specifically for compensation could be sent at regular intervals (every 128 frames for example). Either way the ONU(s) can use this incoming data to train its/their compensation algorithms & optimise their coefficients. The head end will include a higher specification laser and so it may not be necessary to use ISI compensation in the downstream direction. Nevertheless the option remains should it be required. This step also facilitates step 7 which helps speed the convergence of the compensation algorithm for the upstream direction.

4. The ONU adjusts its settings to those received from OLT and [having synchronised itself to the OLT in (1)], determines the windows available in which it can attempt to register and range etc (some PON protocols do not require ranging & registration, but this is the more common requirement)

5. In the registration window the ONU will send request to OLT to register using one or more of the predefined sets of coefficients. Different approaches are possible: (A) the ONU applies each set of coefficients to the data simultaneously in parallel. Some of the results will be completely corrupted by the ISI, but some will give good data. The ONU selects the set that gives the best performance. The selected coefficients can then be accepted and fixed, or used as the initial input parameters for further optimisation by an adaptive equalisation algorithm; (B) the ONU could apply each set of coefficients to the data serially in the same initiation/ranging period. Again some of the results will be corrupted, but the ONU simply selects the set that gives the best performance. These coefficients can then be accepted and fixed, or used as the initial input parameters for further optimisation by an adaptive equalisation algorithm; (C) if the ranging window is too short, an alternative would be for the ONU to send multiple requests across successive ranging windows. The OLT would apply different sets of coefficients in each registration window until it found a set that gave sufficient performance to initiate communication between the OLT & ONU. The OLT could either wait until it had used each set of coefficients to select the best, or, having established communication could apply a more "intelligent" approach to determine the best set to use.

As an optional enhancement, if in listening to the downstream data from the OLT in steps 1-3, the ONU determined a measure of the ISI on the link, or the required coefficients for the equalisation algorithm, this information could be sent upstream to the OLT. Once one of the above methods has found a set of coefficients that is sufficient to extract this data, this information can be used to select the best set of coefficients, according to that predicted by the ONU. Having selected appropriate coefficients for the equalisation algorithm, the OLT is able to extract information from the incoming data. This data contains the request from the ONU. The OLT processes the request (with appropriate security measures if required) and broadcasts an appropriate response. The ONU(s) listens for response in appropriate downstream bytes. If registration fails ONUs can repeat attempts in later registration windows.

6. Ranging. The ranging window is set up so that the other ONUs are not transmitting and therefore do not interfere with, and are not disrupted by ranging/activation. In some protocols such as GPON, the working ONUs are halted during the ranging process, which takes place per ONU. Halting the working ONUs may not be necessary for alternative protocols. In the "ranging" window the ONU sends a message at a know time relative to the start of the ranging window. The OLT receives th is message, and determines its' arrival time, from which, with knowledge of the delay at the ONU (i.e., when response was sent relative to the start of the ranging window) to can calculate the round trip delay - and therefore the transmission delay. The transmission delay is then used to determine what additional delay needs to be added at the ONU to ensure its' upstream data is synchronised. This information is then sent downstream to the ONU. (As with other downstream data, it is broadcast with a suitable identifier that enables the ONU to determine its own data).

7. Optimisation of Equalisation Coefficients. It is assumed that good starting estimate of compensation (equalisation) coefficients was determined in step 5. In a simple implementation this may be sufficient, and the coefficients may not need any further tweaking, in which case the next step may be implemented. If required however further optimisation of the equalisation coefficients can take place. Again a number of options exist.

One approach is to broadcast a message to halt all other ONUs and to allow the new ONU to send sufficiently long a training sequence of known bytes for the OLT. Once the OLT has optimised the compensation coefficients for the new ONU, or it has reached a maximum time period, it stores the compensation coefficients for that ONU. It can then broadcast another downstream message indicating the end of the compensation, enabling either the registration, ranging or compensation of another ONU or a return to normal operation.

An alternative approach is to define a fixed length training sequence that could be sent, either as part of the ranging messages, or in a separate "compensation" window.

A further approach is to use extended messages in the ranging window as this avoids additional complication of the protocols with an additional window. This is possible, as relatively speaking there is quite a lot of time available in the ranging window. The window would have to be correctly dimensioned to deal with these longer messages, but the additional overhead required should be fairly small. If required collision detection could be used to help deal with the situation where different ONUs use the same ranging window: that is, Collision Detection Multiple Access (CDMA) could be used to ensure on ly a single ONU attempts to equalise at once. In the event of a collision ONUs back off a random amount, and monitor ranging window so that only one ONU attempts to range & equalise at once. As the ONU is now registered and ranged it can be controlled by the PON scheduling algorithm, and so is now able to be scheduled so the compensation constants can be saved for that ONU and the compensation optimisation can, if required, be spread over several ranging/optimisation windows.

The initial optimisation may be deemed to be complete after a set number of optimisation sequences, once the error has fallen below a certain size, or once the increments in the coefficients, or the change in the error fallen below a certain size. Further optimisation could be achieved during normal operation - see step 9 below.

8. Once the OLT has optimised the compensation for the ONU and completed registration and ranging it can broadcast an update for the other ONUs indicating it is able to register/range & equalise another ONU. (This step is optional, in particular when the training sequence is of a fixed length and fits into a define position relative to the downstream frame). If there are no "collisions" (where more than one ONU transmits at the same time) it may be possible to deal with more than 1 optimisation at once.

9. Normal Operation. The network is ranged so that all upstream messages are synchronised together so that they can arrive separately in their correct locations within the frame. The ONUs are also compensated . There are several options for subsequent operation. Having chosen the optimum set of predetermined coefficients, and (as noted above) further optionally further optimising them in the initiation stage, there are a number of options for "normal operation"

A) The coefficients can remain fixed for that ONU, so that each time the ONU transmits, the OLT uses the same set of coefficients.

B) The OLT could occasionally attempt to re-optimise which predefined set of coefficients it uses, by occasionally comparing the signal quality from the predefined sets (all of them, or just those closest to the current one in terms of ISI compensation).

C) The OLT could occasionally attempt to re-optimise the coefficients themselves as per the previous implementation.

For B) and C) the OLT can use known bytes in the headers of standard data cells, PLOAM cells, or other specific known "training" cells for this optimisation. The reoptimisation in B) and C) could take place regularly, say every x minutes, every day, etc, or it could be a process that is prompted should a measure of signal quality fall below a certain threshold. (The threshold could be an absolute value, or one relative to the initial performance after optimisation).

The current generation of PONs typically operate at 622 Mbit/s with a typical split of 32 (i.e. 32 ONU's per OLT) and a maximum reach of 20 km. However, future generations of PONs are likely to be required to operate at higher bit rates and over longer distances to bypass outer core transmission equipment. This could involve (but is not limited to) bit rates of 10Gbit/s over fibre distances of $\sim$ 100km. Distortion or other Inter Symbol Interference (ISI), which can be caused by factors such as chromatic dispersion (CD) or polarisation mode dispersion (PMD) along an optical fibre, is considered undesirable even in current systems and is likely to be yet more undesirable at higher bit rates or with systems where the outstations have an optical source of a broader line width (that is, a "lower specification" optical source).

It can be seen that at least some of the embodiment above exploit the knowledge of the PON multiple access protocol of the order transmission of each OLTs of the TDMA slots. As part of the scheduling process the OLT knows in advance which ONU the next cell to be received originated from. The equaliser (compensation procedure) can use this knowledge to quickly switch between the appropriate weighting coefficients to those of the next ONU to compensate the ISI of the next cell. This means that adjacent cells can have very different amounts of ISI, as the algorithm will not need to start the optimisation process from beginning for each cell, but will quickly recall the last set of coefficients and therefore maintain appropriate values in the equalisation algorithm. Thus, rather than have to fully "train up" the adaptive equalisation algorithm to optimise the algorithms' coefficients during the initiation phase, the OLT will have a number (for example, 10), of fixed sets of equalisation coefficients representing different amounts of ISI. (This could for example correspond to different lengths of fibre). In the initiation phase, rather than "train" the algorithm's coefficients from their default values, the device would simply apply each of these different sets of parameters (sequentially or in parallel) to the incoming data. As the data sequence is known, the device then simply has to select the set of coefficients that give the best performance / minimum error. It can then either use this fixed set of coefficients as the ones to use for fixed (non-adaptive) equalisation, or as the initial set of coefficients to be improved upon when using an adaptive algorithm.

A useful consequence of employing electronic equalisation is that the parameters or coefficients used by the equalisation algorithm are available in memory and can easily be copied to an output where they can provide a monitor function for the signal quality from the various ONUs. This would be a useful tool for the network operator in helping provide monitoring for the PON. The data could be fed into a secondary application with knowledge of the PON topology that could correlate the data from the different ONUs to help locate faults and degradations in the PON.

One or more of the embodiments described above will facilitate the operation of existing PONs, such as PONs whose operation (at least previous to the present invention) is in accordance with standards such as the ITU G983 standards, and/or PONs operating at high bit rates. This is achieved by allowing for compensation routines to be applied to data where the characteristics of the distortion changes on short time scales, for example because the path the data has taken changes on such shot time scales. The current generation of PONs tend to make use of high quality optical components (such as externally modulated and distributed feedback ("DFB") lasers to help overcome the effects of signal degradation due to ISI. As indicated above there is a desire to use cheaper components such as Fabry Perot lasers, but their comparatively poor of performance often precludes their use. The embodiments described above may enable the use of lower specification components, allowing substantial cost savings for an operator seeking to deploy an access network. The potential savings are significant and could transform the economics of PON deployment making it a viable solution for access networks. This advantage could have greater potential use than the high bit rate, long distance applications also discussed.

Further considerations include:

- Receivers and equalisation algorithms will preferably be able to handle burst mode traffic.
- Other families of equalisation (compensation) algorithm may be used, such as: Linear Equalisation; Decision Feedback Equalisation (& Feed forward); Non-linear Equalisation; Maximum likelihood sequence detection (MLSD), also referred to as Maximum likelihood detection (MLD); possibly "blind" techniques; and, constant Modulus Algorithms (CMA).
- The above embodiments may be used for other sources of ISI - poor transmitter extinction ratio; (time varying) PMD; mode partition fluctuations in combination with chromatic dispersion.
- A possible alternative to using RAM would be to use multi-threading in a parallel processor
- In a further embodiment, the coefficients (parameters) may monitored in order to monitor performance of one or more of the transmission paths.

**Claims**

1. A central station (12) for receiving data from a plurality of outstations (14), the central station (12) being configured to execute, in use, a compensation procedure for compensating for degradation of data from the outstations (14), the compensation procedure having at least one adjustable characteristic governed by a parameter set, the compensation procedure including the steps of: (i) compensating data from an outstation (14) using different starting parameter sets; (ii) measuring the quality of the data compensated using the different starting parameter sets; and, (iii) in dependence on the measured quality, selecting a starting parameter set to store for compensating subsequent arriving data from that outstation, wherein the central station (12) is configured to store, for subsequent retrieval, a parameter set in respect of each outstation, **characterized by** the central station (12) is configured to transmit a scheduling instruction to an outstation (14) in order to receive data from that outstation, which scheduling instruction contains a command for allowing that outstation (14) to transmit data for a specified time, the stored parameter set retrieved for applying the compensation procedure to incoming data being chosen in dependence on a stored scheduling instruction.

2. A central station (12) according to claim 1, wherein the central station (12) is configured to receive data from the outstations (14) over an optical network (16).

3. A central station (12) according to claim 1 or claim 2, wherein the stored parameter set is selected for each outstation (14) according to steps (i) to (iii).

4. A central station (12) according to any of the preceding claims, wherein steps (i) to (iii) are performed in response to the receipt of data from a newly connected outstation.

5. A central station (12) according to any of the preceding claims, wherein a parameter set is selected from other starting parameter sets by comparing the quality achieved with the different sets.

6. A central station (12) according to any of the preceding claims, wherein test data from an outstation (14) is used to evaluate starting parameter sets, a copy of the test data being stored at the central station (12), preferably in advance of the arrival of the test data from an outstation.

7.   A central station (12) according to any of the preceding claims, wherein the parameter sets each include a plurality of parameters.

8.   A central station (12) according to any of the preceding claims, wherein the compensation procedure is executed in the electrical domain.

9.   A central station (12) according to any of the preceding claims, wherein the compensation procedure includes the steps of: sampling a stream of data from an outstation (14) at a plurality of time positions within the stream; and, performing a respective function on each sample.

10.  A central station (12) according to claim any of the preceding claims, wherein the central station (12) is configured to transmit a further scheduling instruction in order to allow further data to be transmitted if such further data is required.

11.  A central station (12) according to any of the preceding claims, wherein the compensation procedure includes an adaptive algorithm, the adaptive algorithm being configured such that when data from an outstation (14) is received, the values of the parameters for that outstation (14) are improved, relative to a set of initial values, using said received data.

12.  A central station (12) according to claim 11, wherein the central station (12) is configured such that when the origin of arriving data changes from a first outstation (14) to a second outstation, the central station (12): (i) stores, for later retrieval, the improved values of the parameters in respect of data from the first outstation; (ii) retrieves previously stored parameters in respect of the second outstation; (iii) in response to expected or arriving further data from the first outstation, retrieves previously improved values of the parameters in respect of the first outstation; (iv), and, preferably, further improves the parameters for the first outstation.

13.  A method of operating a communications system (10) including a central station (12) and a plurality of outstations (14) connected to the central station (12), the central station being configured to transmit scheduling instructions to the respective outstations, the scheduling instructions each containing a respective command for allowing a given outstanding to transmit data, the central station (12) being operable to execute a compensation procedure for compensating for degradation of data from the outstations (14), the compensation procedure having at least one adjustable characteristic governed by a parameter set, the method including the steps of: (i) compensating data from an outstation (14) using different starting parameter sets; (ii) measuring the quality of the data compensated using the different starting parameter sets; (iii) in dependence on the measured quality, selecting a starting parameter set for compensating subsequent arriving data from that outstation; (iv) for each outstation, storing a respective parameter set for subsequent retrieval for compensating data from that outstation, the parameter set retrieved in respect of subsequent arriving data being selected in dependence on a previously transmitted scheduling instruction.

14.  A method as claimed in claim 13, wherein the communications system includes an optical network for connecting the central station (12) to the outstations (14).

15.  A method as claimed in claim 13 or claim 14, wherein the optical network includes a branch junction for channelling signals from at least two outstations (14) onto a common optical carrier, the outstations (14) being configured to transmit data at intervals such that in use the transmitted data from the outstations (14) is passively time division multiplexed.

16.  A method as claimed in any of claims 13 to 15, wherein the central station (12) stores predetermined data, and the or each outstation (14) stores corresponding predetermined data, and wherein the or each outstation (14) transmits its predetermined data to the central station (12), such that the predetermined data stored at the central station (12) can be compared with the received predetermined data.

17.  A method as claimed in claim 16, wherein the stored predetermined data and the received predetermined data is compared in order to measure the quality of the data compensated using the different starting parameter sets.

18.  A method claimed in claim 16 or claim 17, wherein the predetermined data stored at an outstation (14) and that stored at the central station (12) include at least some data in common.

**Patentansprüche**

1. Zentralstation (12) zum Empfangen von Daten von mehreren Außenstationen (14), wobei die Zentralstation (12) dazu konfiguriert ist, im Betrieb ein Kompensationsverfahren zur Kompensation einer Verschlechterung von Daten von den Außenstationen (14) auszuführen, wobei das Kompensationsverfahren zumindest eine einstellbare Charakteristik aufweist, die von einem Parametersatz geregelt wird, und das Kompensationsverfahren die folgenden Schritte aufweist: (i) Kompensieren von Daten von einer Außenstation (14) unter Verwendung verschiedener Startparametersätze; (ii) Messen der Qualität der Daten, die unter Verwendung der verschiedenen Startparametersätze kompensiert wurden; und (iii) Auswählen eines Startparametersatzes in Abhängigkeit von der gemessenen Qualität, der zur Kompensierung nachfolgender ankommender Daten von jener Außenstation zu speichern ist, wobei die Zentralstation (12) dazu konfiguriert ist, einen Parametersatz bezüglich jeder Außenstation für einen nachfolgenden Abruf zu speichern, **dadurch gekennzeichnet, dass** die Zentralstation (12) dazu konfiguriert ist, eine Ablaufsteuerungsanweisung an eine Außenstation (14) zu übertragen, um Daten von jener Außenstation zu empfangen, welche Ablaufsteuerungsanweisung einen Befehl enthält, um zu erlauben, dass jene Außenstation (14) Daten eine spezifizierte Zeit lang überträgt, wobei der gespeicherte Parametersatz, der zum Anwenden des Kompensationsverfahrens auf hereinkommende Daten abgerufen wird, in Abhängigkeit von einer gespeicherten Ablaufsteuerungsanweisung ausgewählt wird.

2. Zentralstation (12) nach Anspruch 1, wobei die Zentralstation (12) dazu konfiguriert ist, Daten von den Außenstationen (14) über ein optisches Netz (16) zu empfangen.

3. Zentralstation (12) nach Anspruch 1 oder Anspruch 2, wobei der gespeicherte Parametersatz für jede Außenstation (14) gemäß den Schritten (i) bis (iii) ausgewählt wird.

4. Zentralstation (12) nach irgendeinem der vorhergehenden Ansprüche, wobei die Schritte (i) bis (iii) in Antwort auf den Empfang von Daten von einer neu angeschlossenen Außenstation durchgeführt werden.

5. Zentralstation (12) nach irgendeinem der vorhergehenden Ansprüche, wobei ein Parametersatz aus anderen Startparametersätzen durch Vergleichen der mit den verschiedenen Sätzen erzielten Qualität ausgewählt wird.

6. Zentralstation (12) nach irgendeinem der vorhergehenden Ansprüche, wobei Testdaten von einer Außenstation (14) dazu verwendet werden, Startparametersätze zu bewerten, wobei eine Kopie der Testdaten in der Zentralstation (12) gespeichert wird, vorzugsweise vor der Ankunft der Testdaten von einer Außenstation.

7. Zentralstation (12) nach irgendeinem der vorhergehenden Ansprüche, wobei die Parametersätze jeweils mehrere Parameter beinhalten.

8. Zentralstation (12) nach irgendeinem der vorhergehenden Ansprüche, wobei das Kompensationsverfahren im elektrischen Bereich ausgeführt wird.

9. Zentralstation (12) nach irgendeinem der vorhergehenden Ansprüche, wobei das Kompensationsverfahren die folgenden Schritte einschließt: Abtasten eines Datenstroms von einer Außenstation (14) an mehreren Zeitpositionen innerhalb des Stroms; und Durchführen einer entsprechenden Funktion bei jeder Abtastung.

10. Zentralstation (12) nach irgendeinem der vorhergehenden Ansprüche, wobei die Zentralstation (12) dazu konfiguriert ist, eine weitere Ablaufsteuerungsanweisung zu übertragen, um zu erlauben, dass weitere Daten übertragen werden, falls solche weiteren Daten erforderlich sind.

11. Zentralstation (12) nach irgendeinem der vorhergehenden Ansprüche, wobei das Kompensationsverfahren einen adaptiven Algorithmus einschließt und der adaptive Algorithmus so konfiguriert ist, dass, wenn Daten von einer Außenstation (14) empfangen werden, die Werte der Parameter für jene Außenstation (14) im Verhältnis zu einem Satz anfänglicher Daten unter Verwendung der empfangenen Daten verbessert werden.

12. Zentralstation (12) nach Anspruch 11, wobei die Zentralstation (12) so konfiguriert ist, dass, wenn der Ursprung ankommender Daten von einer ersten Außenstation (14) zu einer zweiten Außenstation wechselt, die Zentralstation (12): (i) die verbesserten Werte der Parameter bezüglich Daten von der ersten Außenstation für einen späteren Abruf speichert; (ii) zuvor gespeicherte Parameter bezüglich der zweiten Außenstation abruft; (iii) zuvor verbesserte Werte der Parameter bezüglich der ersten Außenstation in Antwort auf erwartete oder ankommende weitere Daten von der ersten Außenstation abruft; (iv) und vorzugsweise die Parameter für die erste Außenstation weiter verbessert.

13. Verfahren zum Betätigen eines Kommunikationssystems (10), das eine Zentralstation (12) und mehrere mit der Zentralstation (12) verbundene Außenstationen (14) beinhaltet, wobei die Zentralstation dazu konfiguriert ist, Ablaufsteuerungsanweisungen an die jeweiligen Außenstationen zu übertragen, die Ablaufsteuerungsanweisungen jede einen jeweiligen Befehl enthalten, um einer gegebenen Außenstation zu erlauben, Daten zu übertragen, die Zentralstation (12) dazu funktionsfähig ist, ein Kompensationsverfahren auszuführen, um eine Verschlechterung von Daten von den Außenstationen (14) zu kompensieren, das Kompensationsverfahren zumindest eine einstellbare Charakteristik aufweist, die von einem Parametersatz geregelt wird, und das Verfahren die folgenden Schritte beinhaltet: (i) Kompensieren von Daten von einer Außenstation (14) unter Verwendung verschiedener Startparametersätze; (ii) Messen der Qualität der Daten, die unter Verwendung der verschiedenen Startparametersätze kompensiert wurden; (iii) Auswählen eines Startparametersatzes in Abhängigkeit von der gemessenen Qualität zur Kompensierung nachfolgender ankommender Daten von jener Außenstation; (iv) Speichern eines jeweiligen Parametersatzes für den nachfolgenden Abruf für jede Außenstation, um Daten von jener Außenstation zu kompensieren, wobei der bezüglich nachfolgender ankommender Daten abgerufene Parametersatz in Abhängigkeit von einer zuvor übertragenen Ablaufsteuerungsanweisung ausgewählt wird.

14. Verfahren nach Anspruch 13, wobei das Kommunikationssystem ein optisches Netz zum Verbinden der Zentralstation (12) mit den Außenstationen (14) beinhaltet.

15. Verfahren nach Anspruch 13 oder Anspruch 14, wobei das optische Netz eine Abzweigungsverbindung zum Kanalisieren von Signalen von zumindest zwei Außenstationen (14) auf einen gemeinsamen optischen Träger beinhaltet, wobei die Außenstationen (14) dazu konfiguriert sind, Daten in Intervallen so zu übertragen, dass die übertragenen Daten von den Außenstationen (14) im Betrieb passiv zeitmultiplext werden.

16. Verfahren nach irgendeinem der Ansprüche 13 bis 15, wobei die Zentralstation (12) vorgegebene Daten speichert und die oder jede Außenstation (14) entsprechende vorgegebene Daten speichert, und wobei die oder jede Außenstation (14) ihre vorgegebenen Daten zur Zentralstation (12) überträgt, so dass die vorgegebenen Daten, die in der Zentralstation (12) gespeichert sind, mit den empfangenen vorgegebenen Daten verglichen werden können.

17. Verfahren nach Anspruch 16, wobei die gespeicherten vorgegebenen Daten und die empfangenen vorgegebenen Daten verglichen werden, um die Qualität der Daten, die unter Verwendung der verschiedenen Startparametersätze kompensiert wurden, zu messen.

18. Verfahren nach Anspruch 16 oder Anspruch 17, wobei die in einer Außenstation (14) gespeicherten vorgegebenen Daten und jene, die in der Zentralstation (12) gespeichert sind, zumindest einige Daten gemeinsam einschließen.

**Revendications**

1. Station centrale (12) pour la réception de données provenant d'une pluralité de stations d'extrémité (14), la station centrale (12) étant configurée pour exécuter, en exploitation, une procédure de compensation pour compenser une dégradation de données provenant des stations d'extrémité (14), la procédure de compensation présentant au moins une caractéristique réglable régie par un jeu de paramètres, la procédure de compensation comprenant les étapes consistant à : (i) compenser des données provenant d'une station d'extrémité (14) en utilisant différents jeux de paramètres de départ ; (ii) mesurer la qualité des données compensées en utilisant les différents jeux de paramètres de départ ; et (iii) en fonction de la qualité mesurée, choisir un jeu de paramètres de départ pour mémorisation pour la compensation de données arrivant par la suite en provenance de cette station d'extrémité, la station centrale (12) étant configurée pour mémoriser, pour récupération ultérieure, un jeu de paramètres concernant chaque station d'extrémité, **caractérisée par le fait que** la station centrale (12) est configurée pour transmettre une instruction d'ordonnancement à une station d'extrémité (14) afin de recevoir des données provenant de cette station d'extrémité, cette instruction d'ordonnancement contenant une commande permettant à cette station d'extrémité (14) de transmettre des données pendant une durée spécifiée, le jeu de paramètres mémorisés récupéré pour l'application de la procédure de compensation à des données entrantes étant choisi en fonction d'une instruction d'ordonnancement mémorisée.

2. Station centrale (12) selon la revendication 1, dans laquelle la station centrale (12) est configurée pour recevoir des données provenant des stations d'extrémité (14) sur un réseau optique (16).

**3.** Station centrale (12) selon la revendication 1 ou la revendication 2, dans laquelle le jeu de paramètres mémorisés est sélectionné pour chaque station d'extrémité (14) selon les étapes (i) à (iii).

**4.** Station centrale (12) selon l'une quelconque des revendications précédentes, dans laquelle les étapes (i) à (iii) sont réalisées en réponse à la réception de données provenant d'une station d'extrémité nouvellement connectée.

**5.** Station centrale (12) selon l'une quelconque des revendications précédentes, dans laquelle un jeu de paramètres est sélectionné parmi d'autres jeux de paramètres de départ par comparaison de la qualité obtenue avec les jeux différents.

**6.** Station centrale (12) selon l'une quelconque des revendications précédentes, dans laquelle des données d'essai provenant d'une station d'extrémité (14) sont exploitées afin d'évaluer des jeux de paramètres de départ, une copie des données d'essai étant stockée au niveau de la station centrale (12), de préférence à l'avance par rapport à l'arrivée des données d'essai en provenance d'une station d'extrémité.

**7.** Station centrale (12) selon l'une quelconque des revendications précédentes, dans laquelle les jeux de paramètres comprennent chacun une pluralité de paramètres.

**8.** Station centrale (12) selon l'une quelconque des revendications précédentes, dans laquelle la procédure de compensation est exécutée dans le domaine électrique.

**9.** Station centrale (12) selon l'une quelconque des revendications précédentes, dans laquelle la procédure de compensation comprend les étapes consistant à : échantillonner un flux de données provenant d'une station d'extrémité (14) à une pluralité de positions temporelles dans le flux ; et, pratiquer une fonction respective sur chaque échantillon.

**10.** Station centrale (12) selon l'une quelconque des revendications précédentes, dans laquelle la station centrale (12) est configurée pour émettre une instruction d'ordonnancement supplémentaire afin de permettre la transmission de données supplémentaires dans le cas où de telles données supplémentaires sont requises.

**11.** Station centrale (12) selon l'une quelconque des revendications précédentes, dans laquelle la procédure de compensation comprend un algorithme adaptatif, l'algorithme adaptatif étant configuré de sorte que lors de la réception de données provenant d'une station d'extrémité (14), les valeurs des paramètres pour cette station d'extrémité (14) sont améliorées par rapport à un jeu de valeurs initiales, en utilisant lesdites données reçues.

**12.** Station centrale (12) selon la revendication 11, dans laquelle ladite station centrale (12) est configurée de sorte que, dans le cas où l'origine des données arrivant bascule d'une première station d'extrémité (14) vers une deuxième station d'extrémité, la station centrale (12) : (i) mémorise, pour récupération ultérieure, les valeurs améliorées des paramètres concernant des données provenant de la première station d'extrémité; (ii) récupère des paramètres mémorisés précédemment concernant la deuxième station d'extrémité ; (iii) en réponse à des données supplémentaires attendues ou arrivant en provenance de la première station d'extrémité, récupère des valeurs améliorées précédemment des paramètres concernant la première station d'extrémité ; (iv), et, de préférence, améliore encore les paramètres pour la première station d'extrémité.

**13.** Procédé pour l'exploitation d'un système de communication (10) comprenant une station centrale (12) et une pluralité de stations d'extrémité (14) reliées à la station centrale (12), la station centrale étant configurée pour transmettre des instructions d'ordonnancement aux stations d'extrémité respectives, les instructions d'ordonnancement contenant chacune une commande respective pour permettre la transmission de données par une station d'extrémité donnée, la station centrale (12) pouvant fonctionner pour exécuter une procédure de compensation pour compenser une dégradation de données provenant des stations d'extrémité (14), la procédure de compensation présentant au moins une caractéristique réglable régie par un jeu de paramètres, le procédé comprenant les étapes consistant à : (i) compenser des données provenant d'une station d'extrémité (14) en utilisant différents jeux de paramètres de départ ; (ii) mesurer la qualité des données compensées en utilisant les différents jeux de paramètres de départ ; (iii) en fonction de la qualité mesurée, choisir un jeu de paramètres de départ pour compenser des données arrivant ultérieurement en provenance de cette station d'extrémité ; (iv) pour chaque station d'extrémité, mémoriser un jeu de paramètres respectifs pour récupération ultérieure pour la compensation de données provenant de cette station d'extrémité, le jeu de paramètres récupéré concernant des données arrivant ultérieurement étant sélectionné en fonction d'une instruction d'ordonnancement transmise précédemment.

**14.** Procédé selon la revendication 13, dans lequel le système de communication comprend un réseau optique pour le raccordement de la station centrale (12) aux stations d'extrémité (14).

**15.** Procédé selon la revendication 13 ou la revendication 14, dans lequel le réseau optique comprend une jonction de branchement pour diriger des signaux d'au moins deux stations d'extrémité (14) vers un support optique commun, les stations d'extrémité (14) étant configurées pour émettre des données à des intervalles de sorte que, en exploitation, les données émises en provenance des stations d'extrémité (14) sont multiplexées passivement par répartition dans le temps.

**16.** Procédé selon l'une quelconque des revendications 13 à 15, dans lequel la station centrale (12) mémorise des données prédéterminées, et la ou chaque station d'extrémité (14) mémorise des données prédéterminées correspondantes, et dans lequel la ou chaque station d'extrémité (14) transmet ses données prédéterminées à la station centrale (12), de sorte que les données prédéterminées mémorisées au niveau de la station centrale (12) puissent être comparées avec les données prédéterminées reçues.

**17.** Procédé selon la revendication 16, dans lequel les données prédéterminées mémorisées et les données prédéterminées reçues sont comparées afin de mesurer la qualité des données compensées en utilisant les différents jeux de paramètres de départ.

**18.** Procédé selon la revendication 16 ou la revendication 17, dans lequel les données prédéterminées mémorisées au niveau d'une station d'extrémité (14) et celles mémorisés au niveau de la station centrale (12) comprennent au moins certaines données en commun.

# Fig.1.

# Fig.2a.

Downstream - Broadcast

# Fig.2b.

Upstream - Interleaved Multiplex

# Fig.3a.

PLOAM cells contain grants, message fields, sync bytes and CRC check bytes

**Downstream Frame Format**

| PLOAM1 | ATM Cell 1 | ATM Cell 2 | | ATM Cell 27 | PLOAM2 | ATM Cell 28 | | ATM Cell 54 |

# Fig.3b.

Overhead, preamble, delimiting bits and a "guard band" between cells designated "□"

**Upstream Frame Format**

| ATM Cell 1 | ATM Cell 2 | | ATM Cell N | | ATM Cell 54 |

EP 1 730 913 B1

## Fig.4.

## Fig.5.

# Fig.6.

(i)

Initialisation Phase

(ii)

(iii)

(iv)

Initialisation Phase

# Fig.7.

| S T E P | Description | M1 | M2 | M3 | $c_0$ | $c_1$ | $c_2$ | $E(t_x) =$ $c_0 t_x + c_1 t_{x-1} + c_2 t_{x-2}$ |
|---|---|---|---|---|---|---|---|---|
| | Initially all memory locations are set to zero. Coefficients fixed. | 0 | 0 | 0 | $c_0$ | $c_1$ | $c_2$ | |
| 1a | Shift Data (redundant this time) | 0 | 0 | 0 | $c_0$ | $c_1$ | $c_2$ | |
| 1b | Sample signal at position x, save to first data location | R1 | 0 | 0 | $c_0$ | $c_1$ | $c_2$ | |
| 1c | Calculate equalised data, E | R1 | 0 | 0 | $c_0$ | $c_1$ | $c_2$ | $c_0.R1$ |
| 2a | Shift data | 0 | R1 | 0 | $c_0$ | $c_1$ | $c_2$ | |
| 2b | Sample signal at position x+1, save to first data location | R2 | R1 | 0 | $c_0$ | $c_1$ | $c_2$ | |
| 2c | Calculate equalised data, E | R2 | R1 | 0 | $c_0$ | $c_1$ | $c_2$ | $c_0.R2 + c_1.R1$ |
| 3a | Shift data | 0 | R2 | R1 | $c_0$ | $c_1$ | $c_2$ | |
| 3b | Sample signal at position x+2, save to first data location | R3 | R2 | R1 | $c_0$ | $c_1$ | $c_2$ | |
| 3c | Calculate equalised data, E | R3 | R2 | R1 | $c_0$ | $c_1$ | $c_2$ | $c_0.R3 + c_1.R2 +$ $c_2.R1$ |
| 4 | Shift data, Sample signal at position x+3, save to first data location, Calculate equalised data, E | R4 | R3 | R2 | $c_0$ | $c_1$ | $c_2$ | $c_0.R4 + c_1.R3 +$ $c_2.R2$ |
| 5 | Shift data, Sample signal at position x+4, save to first data location, Calculate equalised data, E | R5 | R4 | R3 | $c_0$ | $c_1$ | $c_2$ | $c_0.R5 + c_1.R4 +$ $c_2.R3$ |
| 6 | Shift data, Sample signal at position x+5, save to first data location, Calculate equalised data, E | R6 | R5 | R4 | $c_0$ | $c_1$ | $c_2$ | $c_0.R6 + c_1.R5 +$ $c_2.R4$ |
| 7 | Shift data, Sample signal at position x+6, save to first data location, Calculate equalised data, E | R7 | R6 | R5 | $c_0$ | $c_1$ | $c_2$ | $c_0.R7 + c_1.R6 +$ $c_2.R5$ |

# Fig.8a.

| STEP | Description | M1 | M2 | M3 | $c_0$ | $c_1$ | $c_2$ |
|---|---|---|---|---|---|---|---|
| 0 | Initially all memory locations are set to zero. Coefficients set to their initial values | 0 | 0 | 0 | $c_0(0)$ | $c_1(0)$ | $c_2(0)$ |
| 1a | Shift Data (redundant this time) | 0 | 0 | 0 | $c_0(0)$ | $c_1(0)$ | $c_2(0)$ |
| 1b | Sample signal at position x, save to first data location | R1 | 0 | 0 | $c_0(0)$ | $c_1(0)$ | $c_2(0)$ |
| 1c | Calculate equalised data, E | R1 | 0 | 0 | $c_0(0)$ | $c_1(0)$ | $c_2(0)$ |
| 1d | Calculate "error", e | R1 | 0 | 0 | $c_0(0)$ | $c_1(0)$ | $c_2(0)$ |
| 1e | Calculate gradient, $\delta c$ | R1 | 0 | 0 | $c_0(0)$ | $c_1(0)$ | $c_2(0)$ |
| 1f | Tweak Coefficients $c=c+\delta c$ | R1 | 0 | 0 | $c_0(1) = c_0(0) + \delta c_0$ | $c_1(1) = c_1(0) + \delta c_1$ | $c_2(1) = c_2(0) + \delta c_2$ |
| 2a | Shift Data | 0 | R1 | 0 | $c_0(1)$ | $c_1(1)$ | $c_2(1)$ |
| 2b | Sample signal at position x+1, save to first data location | R2 | R1 | 0 | $c_0(1)$ | $c_1(1)$ | $c_2(1)$ |
| 2c | Calculate equalised data, E | R2 | R1 | 0 | $c_0(1)$ | $c_1(1)$ | $c_2(1)$ |
| 2d | Calculate "error", e | R2 | R1 | 0 | $c_0(1)$ | $c_1(1)$ | $c_2(1)$ |
| 2e | Calculate gradient, $\delta c$ | R2 | R1 | 0 | $c_0(1)$ | $c_1(1)$ | $c_2(1)$ |
| 2f | Tweak Coefficients $c=c+\delta c$ | R2 | R1 | 0 | $c_0(2) = c_0(1) + \delta c_0$ | $c_1(2) = c_1(1) + \delta c_1$ | $c_2(2) = c_2(1) + \delta c_2$ |
| 3a | Shift Data | 0 | R2 | R1 | $c_0(2)$ | $c_1(2)$ | $c_2(2)$ |
| 3b | Sample signal at position x+2, save to first data location | R3 | R2 | R1 | $c_0(2)$ | $c_1(2)$ | $c_2(2)$ |
| 3c | Calculate equalised data, E | R3 | R2 | R1 | $c_0(2)$ | $c_1(2)$ | $c_2(2)$ |
| 3d | Calculate "error", e | R3 | R2 | R1 | $c_0(2)$ | $c_1(2)$ | $c_2(2)$ |
| 3e | Calculate gradient, $\delta c$ | R3 | R2 | R1 | $c_0(2)$ | $c_1(2)$ | $c_2(2)$ |
| 3f | Tweak Coefficients $c=c+\delta c$ | R3 | R2 | R1 | $c_0(3) = c_0(2) + \delta c_0$ | $c_1(3) = c_1(2) + \delta c_1$ | $c_2(3) = c_2(2) + \delta c_2$ |
| 4a | Shift Data | 0 | R3 | R2 | $c_0(3)$ | $c_1(3)$ | $c_2(3)$ |
| 4b | Sample signal at position x+3, save to first data location | R4 | R3 | R2 | $c_0(3)$ | $c_1(3)$ | $c_2(3)$ |
| 4c | Calculate equalised data, E | R4 | R3 | R2 | $c_0(3)$ | $c_1(3)$ | $c_2(3)$ |
| 4d | Calculate "error", e | R4 | R3 | R2 | $c_0(3)$ | $c_1(3)$ | $c_2(3)$ |
| 4e | Calculate gradient, $\delta c$ | R4 | R3 | R2 | $c_0(3)$ | $c_1(3)$ | $C_2(3)$ |
| 4f | Tweak Coefficients $c=c+\delta c$ | R4 | R3 | R2 | $c_0(4) = c_0(3) + \delta c_0$ | $c_1(4) = c_1(3) + \delta c_1$ | $c_2(4) = c_2(3) + \delta c_2$ |

# Fig.8b.

| STEP | Description | Error, e | Gradient | E |
|---|---|---|---|---|
| 0 | Initially all memory locations are set to zero. Coefficients set to their initial values | | | |
| 1a | Shift Data (redundant this time) | | | |
| 1b | Sample signal at position x, save to first data location | | | |
| 1c | Calculate equalised data, E | | | $E(1) = c_0(0).R1$ |
| 1d | Calculate "error", e | $e(1) = K(1) - E(1)$ | | |
| 1e | Calculate gradient, $\delta c$ | | $\delta c = (\delta c_0, \delta c_1, \delta c_2)$ | |
| 1f | Tweak Coefficients $c=c+\delta c$ | | | |
| 2a | Shift Data | | | |
| 2b | Sample signal at position x+1, save to first data location | | | |
| 2c | Calculate equalised data, E | | | $E(2) = c_0(1).R2 + c_1(1).R1$ |
| 2d | Calculate "error", e | $e(2) = K(2) - E(2)$ | | |
| 2e | Calculate gradient, $\delta c$ | | $\delta c = (\delta c_0, \delta c_1, \delta c_2)$ | |
| 2f | Tweak Coefficients $c=c+\delta c$ | | | |
| 3a | Shift Data | | | |
| 3b | Sample signal at position x+2, save to first data location | | | |
| 3c | Calculate equalised data, E | | | $E(3) = c_0(2).R3 + c_1(2).R2 + c_2(2).R1$ |
| 3d | Calculate "error", e | $e(3) = K(3) - E(3)$ | | |
| 3e | Calculate gradient, $\delta c$ | | $\delta c = (\delta c_0, \delta c_1, \delta c_2)$ | |
| 3f | Tweak Coefficients $c=c+\delta c$ | | | |
| 4a | Shift Data | | | |
| 4b | Sample signal at position x+3, save to first data location | | | |
| 4c | Calculate equalised data, E | | | $E(4) = c_0(3).R4 + c_1(3).R3 + c_2(3).R2$ |
| 4d | Calculate "error", e | $e(4) = K(4) - E(4)$ | | |
| 4e | Calculate gradient, $\delta c$ | | $\delta c = (\delta c_0, \delta c_1, \delta c_2)$ | |
| 4f | Tweak Coefficients $c=c+\delta c$ | | | |

# Fig.9a.

| Step | | Description | M1 | M2 | M3 | ONU |
|---|---|---|---|---|---|---|
| | II | Determine ONU | | | | j |
| | III | Retrieve coefficients for ONU | | | | j |
| i | IV | Shift Data | 0 | 0 | 0 | J |
| | V | Sample signal, save to first data location | Ri | 0 | 0 | J |
| | VI | Calculate equalised data, E | Ri | 0 | 0 | J |
| | VII | Calculate "error", e | Ri | 0 | 0 | J |
| | VIII | Calculate gradient, $\delta c$ | Ri | 0 | 0 | J |
| | IX | Tweak Coefficients $\overline{c}=c+\delta c$ | Ri | 0 | 0 | J |
| | X | End of Cell? [No] | Ri | 0 | 0 | J |
| i+1 | IV | Shift Data | 0 | Ri | 0 | J |
| | V | Sample signal, save to first data location | Ri+1 | Ri | 0 | J |
| | VI | Calculate equalised data, E | Ri+1 | Ri | 0 | j |
| | VII | Calculate "error", e | Ri+1 | Ri | 0 | j |
| | VIII | Calculate gradient, $\delta c$ | Ri+1 | Ri | 0 | j |
| | IX | Tweak Coefficients $c=c+\delta c$ | Ri+1 | Ri | 0 | j |
| | X | End of Cell? [No] | Ri+1 | Ri | 0 | j |
| i+2 | IV | Shift Data | 0 | Ri+1 | Ri | j |
| | V | Sample signal, save to first data location | Ri+2 | Ri+1 | Ri | j |
| | VI | Calculate equalised data, E | Ri+2 | Ri+1 | Ri | j |
| | VII | Calculate "error", e | Ri+2 | Ri+1 | Ri | j |
| | VIII | Calculate gradient, $\delta c$ | Ri+2 | Ri+1 | Ri | j |
| | IX | Tweak Coefficients $c=c+\delta c$ | Ri+2 | Ri+1 | Ri | j |
| | X | End of Cell? [No] | Ri+2 | Ri+1 | Ri | j |
| i+3 | IV | Shift Data | 0 | Ri+2 | Ri+1 | j |
| | V | Sample signal, save to first data location | Ri+3 | Ri+2 | Ri+1 | j |
| | VI | Calculate equalised data, E | Ri+3 | Ri+2 | Ri+1 | j |
| | VII | Calculate "error", e | Ri+3 | Ri+2 | Ri+1 | j |
| | VIII | Calculate gradient, $\delta c$ | Ri+3 | Ri+2 | Ri+1 | j |
| | IX | Tweak Coefficients $c=c+\delta c$ | Ri+3 | Ri+2 | Ri+1 | j |
| | X | End of Cell? [No] | Ri+3 | Ri+2 | Ri+1 | j |
| | X | Etc, etc, etc, ............ End of Cell? [Yes] Store coefficients for ONU j Start loop for new cell | " " | " " | " " | j j j |

# Fig.9a (Cont).

| Step | | Description | M1 | M2 | M3 | ONU |
|---|---|---|---|---|---|---|
| M | II | Determine ONU | | | | n |
| M | III | Retrieve coefficients for ONU | | | | n |
| M | IV | Shift Data | 0 | 0 | 0 | n |
| | V | Sample signal, save to first data location | Rm | 0 | 0 | n |
| | VI | Calculate equalised data, E | Rm | 0 | 0 | n |
| | VII | Calculate "error", e | Rm | 0 | 0 | n |
| | VIII | Calculate gradient, $\delta c$ | Rm | 0 | 0 | n |
| | IX | Tweak Coefficients c=c+$\delta c$ | Rm | 0 | 0 | n |
| | X | End of Cell? [No] | Rm | 0 | 0 | n |
| M+1 | IV | Shift Data | 0 | Rm | 0 | n |
| | V | Sample signal, save to first data location | Rm+1 | Rm | 0 | n |
| | VI | Calculate equalised data, E | Rm+1 | Rm | 0 | n |
| | VII | Calculate "error", e | Rm+1 | Rm | 0 | n |
| | VIII | Calculate gradient, $\delta c$ | Rm+1 | Rm | 0 | n |
| | IX | Tweak Coefficients c=c+$\delta c$ | Rm+1 | Rm | 0 | n |
| | X | End of Cell? [No] | Rm+1 | Rm | 0 | n |
| M+2 | IV | Shift Data | 0 | Rm+1 | Rm | n |
| | | Etc, etc, etc ...... | | | | |

# Fig.9b.

| Step | | $c_0$ | $c_1$ | $c_2$ | Error | Gradient | E |
|---|---|---|---|---|---|---|---|
| | II | | | | | | |
| | III | $c_0(j,i)$ | $c_1(j,i)$ | $c_2(j,i)$ | | | |
| i | IV | $c_0(j,i)$ | $c_1(j,i)$ | $c_2(j,i)$ | | | |
| | V | $c_0(j,i)$ | $c_1(j,i)$ | $c_2(j,i)$ | | | |
| | VI | $c_0(j,i)$ | $c_1(j,i)$ | $c_2(j,i)$ | | | E(i) |
| | VII | $c_0(j,i)$ | $c_1(j,i)$ | $c_2(j,i)$ | e | | |
| | VIII | $c_0(j,i)$ | $c_1(j,i)$ | $c_2(j,i)$ | | $\delta c$ | |
| | IX | $c_0(j,i+1) =$ $c_0(j,i) +$ $\delta c_0$ | $c_1(j,i+1) =$ $c_1(j,i) +$ $\delta c_1$ | $c_2(j,i+1) =$ $c_2(j,i) +$ $\delta c_2$ | | | |
| | X | $c_0(j,i+1)$ | $c_1(j,i+1)$ | $c_2(j,i+1)$ | | | |
| i+1 | IV | $c_0(j,i+1)$ | $c_1(j,i+1)$ | $c_2(j,i+1)$ | | | |
| | V | $c_0(j,i+1)$ | $c_1(j,i+1)$ | $c_2(j,i+1)$ | | | |
| | VI | $c_0(j,i+1)$ | $c_1(j,i+1)$ | $c_2(j,i+1)$ | | | E(i+1) |
| | VII | $c_0(j,i+1)$ | $c_1(j,i+1)$ | $c_2(j,i+1)$ | e | | |
| | VIII | $c_0(j,i+1)$ | $c_1(j,i+1)$ | $c_2(j,i+1)$ | | $\delta c$ | |
| | IX | $c_0(j,i+2) =$ $c_0(j,i+1) +$ $\delta c_0$ | $c_1(j,i+2) =$ $c_1(j,i+1) +$ $\delta c_1$ | $c_2(j,i+2) =$ $c_2(j,i+1) +$ $\delta c_2$ | | | |
| | X | $c_0(j,i+2)$ | $c_1(j,i+2)$ | $c_2(j,i+2)$ | | | |
| i+2 | IV | $c_0(j,i+2)$ | $c_1(j,i+2)$ | $c_2(j,i+2)$ | | | |
| | V | $c_0(j,i+2)$ | $c_1(j,i+2)$ | $c_2(j,i+2)$ | | | |
| | VI | $c_0(j,i+2)$ | $c_1(j,i+2)$ | $c_2(j,i+2)$ | | | E(i+2) |
| | VII | $c_0(j,i+2)$ | $c_1(j,i+2)$ | $c_2(j,i+2)$ | e | | |
| | VIII | $c_0(j,i+2)$ | $c_1(j,i+2)$ | $c_2(j,i+2)$ | | $\delta c$ | |
| | IX | $c_0(j,i+3) =$ $c_0(j,i+2) +$ $\delta c_0$ | $c_1(j,i+3) =$ $c_1(j,i+2) +$ $\delta c_1$ | $c_2(j,i+3) =$ $c_2(j,i+2) +$ $\delta c_2$ | | | |
| | X | $c_0(j,i+3)$ | $c_1(j,i+3)$ | $c_2(j,i+3)$ | | | |
| i+3 | IV | $c_0(j,i+3)$ | $c_1(j,i+3)$ | $c_2(j,i+3)$ | | | |
| | V | $c_0(j,i+3)$ | $c_1(j,i+3)$ | $c_2(j,i+3)$ | | | |
| | VI | $c_0(j,i+3)$ | $c_1(j,i+3)$ | $c_2(j,i+3)$ | | | E(i+3) |
| | VII | $c_0(j,i+3)$ | $c_1(j,i+3)$ | $c_2(j,i+3)$ | e | | |
| | VIII | $c_0(j,i+3)$ | $c_1(j,i+3)$ | $c_2(j,i+3)$ | | $\delta c$ | |
| | IX | $c_0(j,i+4) =$ $c_0(j,i+3) +$ $\delta c_0$ | $c_1(j,i+4) =$ $c_1(j,i+3) +$ $\delta c_1$ | $c_2(j,i+4) =$ $c_2(j,i+3) +$ $\delta c_2$ | | | |
| | X | $c_0(j,i+4)$ | $c_1(j,i+4)$ | $c_2(j,i+4)$ | | | |
| | X | " " | " " | " " | | | |

# Fig.9b (Cont).

| Step | | $c_0$ | $c_1$ | $c_2$ | Error | Gradient | E |
|---|---|---|---|---|---|---|---|
| | | Store coefficients for ONU j | | | | | |
| M | II | | | | | | |
| M | III | $c_0(n,m)$ | $c_1(n,m)$ | $c_2(n,m)$ | | | |
| M | IV | $c_0(n,m)$ | $c_1(n,m)$ | $c_2(n,m)$ | | | |
| | V | $c_0(n,m)$ | $c_1(n,m)$ | $c_2(n,m)$ | | | |
| | VI | $c_0(n,m)$ | $c_1(n,m)$ | $c_2(n,m)$ | | | E(m) |
| | VII | $c_0(n,m)$ | $c_1(n,m)$ | $c_2(n,m)$ | e | | |
| | VIII | $c_0(n,m)$ | $c_1(n,m)$ | $c_2(n,m)$ | | $\delta c$ | |
| | IX | $c_0(n,m+1)$ $= c_0(n,m)$ $+ \delta c_0$ | $c_1(n,m+1)$ $= c_1(n,m)$ $+ \delta c_1$ | $c_2(n,m+1)$ $= c_2(n,m)$ $+ \delta c_2$ | | | |
| | X | $c_0(n,m+1)$ | $c_1(n,m+1)$ | $c_2(n,m+1)$ | | | |
| M+1 | IV | $c_0(n,m+1)$ | $c_1(n,m+1)$ | $c_2(n,m+1)$ | | | |
| | V | $c_0(n,m+1)$ | $c_1(n,m+1)$ | $c_2(n,m+1)$ | | | |
| | VI | $c_0(n,m+1)$ | $c_1(n,m+1)$ | $c_2(n,m+1)$ | | | E(m+1) |
| | VII | $c_0(n,m+1)$ | $c_1(n,m+1)$ | $c_2(n,m+1)$ | e | | |
| | VIII | $c_0(n,m+1)$ | $c_1(n,m+1)$ | $c_2(n,m+1)$ | | $\delta c$ | |
| | IX | $c_0(n,m+2)$ $=$ $c_0(n,m+1)$ $+ \delta c_0$ | $c_1(n,m+2)$ $=$ $c_1(n,m+1)$ $+ \delta c_1$ | $c_2(n,m+2)$ $=$ $c_2(n,m+1)$ $+ \delta c_2$ | | | |
| | X | $c_0(n,m+2)$ | $c_1(n,m+2)$ | $c_2(n,m+2)$ | | | |
| M+2 | IV | $c_0(n,m+2)$ | $c_1(n,m+2)$ | $c_2(n,m+2)$ | | | |

# Fig.10.

```
0: New Cell
     │
     ▼
1: determine which
ONU (i) from PON
scheduling algorithm
     │
     ▼
2: Recall Coefficients
vector C(i) for
ONU(i)
     │
     ▼
Read Data
     │
     ▼
3:
"Equalise: Data
using C(i)
     │
     ▼
Adaptive
Equalisation ?   ──Yes──▶  4: Determine Error
     │ No                   and gradient
                            vestor, Gi
                                │
                                ▼
                            5: Tweak
                            Coefficients. e.g.:
                            C(i) = C(i) + Gi
                                │
                                ▼
                            6:
                            End of Cell ?  ──No──
                                │ Yes
                                ▼
                            7: If adaptive EQ store
                            new coefficients, C(i),
                            for ONU (i),
                                │
                                ▼
                            Next Cell
```

# Fig.11.

Input data → 901 $Z^{-1}$ → $Z^{-1}$ — — — → $Z^{-1}$

$C_0$ ⊗  $C_1$ ⊗ 902  $C_{N-1}$ ⊗

903 Σ

→ Equalised data, y(t)

Sig. Quality Metric Adaptive Mechanism

# Fig.12a.

A
B
C
D

# Fig.12b.

A
B
C
N
D

# Fig.13.

```
                              ┌─────────────────┐
                              │ 0: Data from New│
                              │    ONU (i)      │
                              └─────────────────┘
```

| 1: "Equalise" Header using coefficients vector **S1** | 1: Equalise" Header using coefficients vector **S2** | 1: Equalise" Header using coefficients vector **S3** | . . . . . . . . | 1: Equalise" Header using coefficients vector **Sn** |

| 2: Determine signal quality Q1, for ONU (i) and **S1** | 2: Determine signal quality Q2, for ONU (i) and **S2** | 2: Determine signal quality Q3, for ONU (i) and **S3** | . . . . . . . . | 2: Determine signal quality Qn, for ONU (i) and **Sn** |

**3:** Select preferred coefficients, $S_{pref}$ or ONU (i) to those that give max signal quality. $C(i)=S_{pref}$

Adaptive Equalisation ? — No / Yes

Store Coefficients, C(i), for ONU (i),

Read & Extract Data using C(i).

Read & Extract Data using C(i).

**4:** Determine Error and Gradient Vector, G_i

End of Cell ? — No / Yes

**5:** Tweak Coefficients. e.g.: C(i) = C(i) + G_i

**6:** End of Cell ? — No / Yes

**7:** Store Coefficients, C(i), for ONU (i),

Next Cell / Next ONU

# Fig.14.

0: Data from New ONU (i)

j=0

j=j+1

1: "Equalise" Header using coefficients vector Sj

2: Determine error / signal quality for vector Sj for ONU (i). Store this value

j=j_max?  —— No

Yes

3: Select preferred coefficients, $S_{pref}$ or ONU (i) to those that give max signal quality. $C(i)=S_{pref}$

Adaptive Equalisation ?

No —— Store Coefficients, C(i), for ONU (i),

Yes —— Read Data

4: Determine Error and Gradient Vector, Gi

5: Tweak Coefficients. e.g.: C(i) = C(i) + Gi

Read & Extract Data using C(i).

End of Cell ?  —— No

Yes

6: End of Cell ?  —— No

Yes

7: Store Coefficients, C(i), for ONU (i),

Next Cell / Next ONU

34

# Fig.15(i).

(i) Improved Initialisation Equaliser

(a)

Best set of
coefficients selected

Optimisation of
(b)     selected coefficients

Initialisation Phase

Time

# Fig.15(ii).

(ii) Improved Initialisation Equaliser with multiple TDMA channels

A

B

C

D

Initialisation Phase

Time

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004037354 A

- US 6658242 B